# EUROPÄISCHE PATENTSCHRIFT

(11) **EP 3 194 232 B1**
(45) Veröffentlichungstag und Bekanntmachung des Hinweises auf die Patenterteilung: **17.07.2019**
(21) Anmeldenummer: 15763589.7
(22) Anmeldetag: 15.09.2015
(51) Int. Cl.: B61D 3/00, B61D 47/00, B65G 63/02

(54) **GÜTERWAGGON MIT EINEM WAGGONAUFSATZ, GÜTERUMSCHLAGVORRICHTUNG MIT DERARTIGEN GÜTERWAGGONS UND GÜTERUMSCHLAGVERFAHREN**
FREIGHT CAR COMPRISING A CAR ATTACHMENT, FREIGHT TRANSFERRING DEVICE COMPRISING SUCH FREIGHT CARS, AND FREIGHT TRANSFERRING METHOD
WAGON DE MARCHANDISES ÉQUIPÉ D'UNE SUPERSTRUCTURE, DISPOSITIF DE TRANSBORDEMENT DE MARCHANDISES AVEC DES TELS WAGONS DE MARCHANDISES ET PROCÉDÉ DE TRANSBORDEMENT DE MARCHANDISES

(30) Priorität: 17.09.2014 DE 102014013778
(43) Veröffentlichungstag der Anmeldung: 26.07.2017
(73) Patentinhaber: Cargobeamer AG, 04319 Leipzig (DE)
(72) Erfinder: WEIDEMANN, Hans-Jürgen, 67346 Speyer (DE); BERGHAMMER, Fritz, 84028 Landshut (DE); SCHAFROTH, Patrick, 84034 Landshut (DE)
(74) Vertreter: Patent- und Rechtsanwälte Dr. Solf & Zapf
(86) Internationale Anmeldenummer: PCT/EP2015/071121
(87) Internationale Veröffentlichungsnummer: WO 2016/041980

(56) Entgegenhaltungen:
- CN-A- 101 134 520
- DE-A1- 10 230 110
- DE-A1- 19 641 869
- DE-A1-102009 012 159
- DE-U1- 9 219 182
- DE-U1- 29 623 699
- DE-U1- 29 810 262
- US-A1- 2003 049 089

## Beschreibung

Die Erfindung betrifft einen Güterwaggon mit einem Waggonaufsatz zur Aufnahme von Stückgut, insbesondere Containergut, bevorzugt als (Klein)gebinde, insbesondere in Form von genormten Behältern wie beispielsweise Gitterboxen, eine Güterumschlagvorrichtung mit derartigen Güterwaggons und ein Güterumschlagverfahren zum Umschlagen des Stückgutes. Stückgut bezeichnet in der Logistik jedes Transportgut, das sich einzeln am Stück transportieren lässt. Bei Stückgut handelt es sich unter anderem um ein Gebinde, beispielsweise Kisten oder Gitterboxen, oder beladene Paletten, Maschinen oder Anlagenteile, Kabel-, Papier- oder Blechrollen und Fässer. Kein Stückgut ist beispielsweise Flüssiggut oder sind Gase, die ohne eigenen Behälter in die Transportfahrzeuge gepumpt werden. Sand, Kohle, Getreide und vergleichbare Feststoffe sind Schütt- oder Sauggut, sofern sie nicht verpackt sind.

Aus der DE 10 2009 012 159 A1 ist eine Güterumschlagvorrichtung für den kombinierten Güterverkehr für eine Terminal- bzw. Bahnsteigabfertigung zum Umschlagen bzw. Versetzen von Gütern wie Containern, Sattelschlepperaufliegern, Lkw-Anhängern, Hängern von Gliederzügen, normalen intermodularen Ladeeinheiten (ISO, Typ C) oder dergleichen von der Straße zur Schiene und umgekehrt bekannt. Das Umschlagen bzw. Versetzen erfolgt dabei durch horizontale schienengleiche Querverladung von Wechseltragelementen bzw. Waggonaufsätzen mittels Quertransporteinrichtungen. Schienengleich meint, dass keine besondere Bahnsteighöhe erforderlich ist bzw. dass die Umschlagfläche des Terminals bzw. Bahnsteigs das gleiche oder nahezu das gleiche Arbeitsniveau hat wie die Schienenstränge der Gleisanlage oder die Achshöhe der Waggons.

Die Güterumschlageinrichtung der DE 10 2009 012 159 A1 weist eine Gleisanlage mit zwei Gleissträngen, sowie eine neben der Gleisanlage und parallel zu dieser angeordnete etwa schienengleiche Verladebahn auf. Des Weiteren weist die Güterumschlageinrichtung mehrere Shuttlebalken für den Quertransport der Wechseltragelemente von einem Schienenwaggon auf die Verladebahn oder umgekehrt auf. Die Shuttlebalken weisen jeweils Hubeinrichtungen auf und sind auf unterflur in Querrillen der Verladebahn angeordneten Tragschienenelement in Querrichtung hin- und her verfahrbar. Auf den wannenförmigen Wechseltragelementen ist das Ladegut abgesetzt und gelagert. Die Wechseltragelemente sind dabei auf den beiden Seitenwänden des Schienenwagons gelagert. Zum Entladen der Schienenwaggons werden die Shuttlebalken unter den Schienenwaggon gefahren, das Wechseltragelement mittels der Hubeinrichtungen angehoben und die Waggonseitenwände nach außen zur Seite weg geklappt. Die Waggonseitenwände werden dabei in eine zwischen den Tragschienen vorhandene Lücke verschwenkt, so dass sie von den die Wechseltragelemente tragenden Shuttlebalken überfahren werden können. Die Wechseltragelemente werden dann durch Absenken auf der Verladebahn abgesenkt.

Die Güterumschlageinrichtung der DE 10 2009 012 159 A1 hat sich bewährt für große Stückgüter wie Container, Sattelschlepperauflieger, Lkw-Anhänger.

Die DE 196 41 869 A1 offenbart einen Container für eine schienengleiche Querverladung zum Aufsetzen auf einen Bahntragwagen eines Güterzuges, wobei der Container eine horizontale Längsrichtung und Auflageelemente zur direkten Auflage auf dem Bahntragwagen aufweist. Der Container ist zudem als gedeckter Container ausgebildet ist und weist eine Bodenwandung, zwei Seitenabdeckungen, zwei Stirnwandungen und ein Dach auf, welche einen Waggoninnenraum begrenzen.

Aufgabe der vorliegenden Erfindung ist die Bereitstellung eines Güterwaggons mit einem Waggonaufsatz, bevorzugt für die schienengleiche Querverladung, mit welchem das Umschlagen von Stückgut, insbesondere Containergut, vorzugsweise als Stückgut in Form von mit losem Transportgut befüllten, genormten oder einheitlichen Behältern wie etwa Gitterboxen, schnell, einfach, kostengünstig möglich ist.

Weitere Aufgaben sind die Bereitstellung einer Güterumschlagvorrichtung mit derartigen Güterwaggons sowie eines schnellen, einfachen, und kostengünstigen Güterumschlagverfahrens zum Umschlagen von losem Stückgut, insbesondere Containergut.

Diese Aufgabe wird durch die Merkmale der Ansprüche 1, 14 und 19 gelöst. Vorteilhafte Weiterbildungen der Erfindung sind in den sich jeweils anschließenden Unteransprüchen gekennzeichnet.

Die Aufgabe der Erfindung wird erstmals gelöst durch einen Güterwaggon gemäß Anspruch 1.

Der Waggonaufsatz des erfindungsgemäßen Güterwaggons kann zudem wie nachfolgend angegeben ausgebildet sein, wobei alle bevorzugten Ausführungsformen für sich oder in Kombination im Rahmen der Erfindung möglich sein sollen:
Vorzugsweise weist der Waggonaufsatz eine zur Aufsatzlängsrichtung senkrechte, horizontale Aufsatzquerrichtung und eine zur Aufsatzlängsrichtung senkrechte, vertikale Aufsatzhöhenrichtung und in Aufsatzlängsrichtung gesehen ein erstes Aufsatzstirnende und ein zweites Aufsatzstirnende auf.

Vorzugsweise ist zumindest eine der Aufsatzseitenabdeckungen öffenbar, wobei der Waggonaufsatz vorzugsweise eine Aufsatzseitenabdeckungsöffnungseinrichtung aufweist, mit der die Aufsatzseitenwandung öffenbar und schließbar in Verbindung steht.

Vorzugsweise ist die Aufsatzbodenwandung gestuft ausgebildet und weist zwei horizontale, stirnendseitige Bodenwandabschnitte einen mittigen, horizontalen Bodenwandabschnitt und zwei, insbesondere vertikale, Bodenwandabschnitte auf, welche jeweils einen der beiden stirnendseitigen Bodenwandabschnitte mit dem mittigen Bodenwandabschnitt verbinden,
wobei der mittige Bodenwandabschnitt in Aufsatzlängsrichtung gesehen zwischen den beiden stirnendseitigen Bodenwandabschnitten angeordnet ist, und wobei der mittige Bodenwandungsabschnitt in Aufsatzhöhenrichtung gesehen tiefer angeordnet als die beiden stirnseitigen Bodenwandungsabschnitte.

Vorzugsweise weist zumindest einer der beiden stirnendseitigen Bodenwandabschnitte einen vertikal nach unten abstehenden Königszapfen als Mittel zur horizontalen Verriegelung des Waggonaufsatzes mit dem Waggonuntergestell auf.

Vorzugsweise steht der Königszapfen jeweils von einer Abschnittsaußenseite eines der beiden stirnseitigen Bodenwandungsabschnitte ab.

Vorzugsweise weist der Waggonaufsatz mehrere vertikale, zur Waggonlängsrichtung senkrechte Zwischenwände und mehrere Zwischenböden auf.

Vorzugsweise weist der Waggonaufsatz
- einen ersten Zwischenboden, welcher auf gleicher Höhe wie die beiden stirnseitigen Bodenwandungsabschnitte angeordnet ist und sich an diese anschließt, und
- einen zweiten Zwischenboden welcher oberhalb des ersten horizontalen Zwischenbodens angeordnet ist und sich von der einen zur anderen Aufsatzstirnwandung erstreckt,
- vorzugsweise einen dritten Zwischenboden, welcher oberhalb des zweiten Zwischenbodens und an einem oberen Ende der Aufsatzstirnwandungen angeordnet ist und sich von der einen zur anderen Aufsatzstirnwandung erstreckt, auf.

Vorzugsweise erstrecken sich die vertikalen Zwischenwände oder erstreckt sich die Zwischenwand durchgehend von der Aufsatzbodenwandung bis zum Aufsatzdach oder dem dritten Zwischenboden.

Vorzugsweise weist der Waggonaufsatz in Aufsatzhöhenrichtung gesehen mehrere übereinander angeordnete, horizontale Abteilreihen auf, wobei eine Abteilreihe jeweils weist mehrere in Aufsatzlängsrichtung zueinander benachbarte, gleich hohe, Abteile aufweist.

Vorzugsweise weist der Waggonaufsatz drei übereinander angeordnete, horizontale Abteilreihen, nämlich eine untere Abteilreihe, eine mittlere Abteilreihe und eine obere Abteilreihe aufweist,
wobei vorzugsweise
- die untere Abteilreihe unten von dem mittigen Bodenwandungsabschnitt, oben von dem ersten Zwischenboden sowie stirnseitig von den beiden vertikalen Bodenwandungsabschnitten begrenzt wird,
- die mittlere Abteilreihe unten von dem ersten Zwischenboden, oben von dem zweiten Zwischenboden sowie stirnseitig von den beiden vertikalen Aufsatzstirnwänden begrenzt wird, und
- die obere Abteilreihe unten von dem zweiten Zwischenboden, oben dritten Zwischenboden oder von dem Aufsatzdach sowie stirnseitig von den beiden vertikalen Aufsatzstirnwänden begrenzt wird.

Vorzugsweise kragen die mittlere und die obere Abteilreihe in Waggonlängsrichtung gesehen an beiden Aufsatzstirnenden über die untere Abteilreihe hinaus.

Vorzugsweise weisen die einzelnen Abteile folgende Abmessungen auf:

| | | vorzugsweise |
|---|---|---|
| | [cm] | [cm] |
| Innenlänge | 200 bis 400 | 300 bis 340 |
| Innenbreite | 240 bis 260 | 250 bis 255 |
| Innenhöhe | 80 bis 140 | 105 bis 120 |

Vorzugsweise weist der Waggonaufsatz eine maximale freie Innenhöhe von mindestens 3 m, bevorzugt von 3 bis 4 m, bevorzugt 3 bis 3,30 m, auf.

Vorzugsweise weist der Waggonaufsatz drei übereinander angeordnete horizontale Abteilreihen auf, deren gleich hohen Abteile alle die gleiche freie Innenhöhe aufweisen, wobei die Abteile jeweils eine freie Innenhöhe von 1 bis 1,33 m, bevorzugt 1 bis 1,1 m aufweisen.

Vorzugsweise weist der Waggonaufsatz folgende Außenabmessungen auf:

| | | bevorzugt |
|---|---|---|
| | [m] | [m] |
| Länge | 15 bis 20 | 17 |
| Breite (Auflageelemente nicht mitgerechnet) | 2,6 bis 2,9 | 2,65 |
| Höhe | 3,8 bis 4,5 | 4 |

Vorzugsweise sind in den Abteilen quaderförmige Behälter zur Aufnahme von loser Ware, insbesondere Containergut, angeordnet, wobei vorzugsweise die Gesamtlänge der in Aufsatzlängsrichtung nebeneinander angeordneten Behälter eines Abteils 4 bis 8 cm kleiner ist als die Innenlänge des Abteils.

Vorzugsweise sind die Behälter in Waggonlängsrichtung und bevorzugt in Waggonquerrichtung gesehen formschlüssig in den Abteilen angeordnet, wobei ein Abteil einen oder mehrere, über- und/oder nebeneinander angeordnete, Behälter aufweist.

Vorzugsweise weist der Waggonaufsatz einen Datenträger, insbesondere einen RFID-Chip oder Barcode oder "QR-Codes", auf, auf dem Informationen bezüglich der Art der Ladung des Waggonaufsatzes und des Ortes der Ladung im Waggonaufsatz enthalten sind.

Vorzugsweise weist der Waggonaufsatz an beiden Aufsatzstirnenden einen verfahrbaren Untersatz auf, wobei die Untersätze Räder zum Verfahren des Waggonaufsatzes aufweisen und wobei der Waggonaufsatz mit den Untersätzen lösbar verbunden ist.

Der erfindungsgemäße Güterwaggon kann zudem wie nachfolgend angegeben ausgebildet sein, wobei alle bevorzugten Ausführungsformen für sich oder in Kombination im Rahmen der Erfindung möglich sein sollen:
Vorzugsweise ist der Waggonaufsatz in die Waggonseitenwände eingehängt.

Vorzugsweise ist der Waggonaufsatz mit dem Waggonuntergestell in horizontaler und bevorzugt auch in vertikaler Richtung lösbar verriegelt.

Vorzugsweise weisen die beiden Waggonkopfstücke jeweils oberseitig eine Königszapfenarretierungseinrichtung auf, mittels der jeweils einer der beiden Königszapfen des Waggonaufsatzes in horizontaler und bevorzugt auch vertikaler Richtung relativ zum Waggonuntergestell lösbar verriegelt ist.

Vorzugsweise weisen die beiden Waggonseitenwände jeweils eine Wandinnenseite, eine dieser in eine Waggonquerrichtung gegenüberliegende Wandaußenseite, eine Wandoberkante und eine Wandunterkante auf.

Vorzugsweise sind die beiden stirnseitigen Bodenwandungsabschnitte über den beiden Waggonkopfstücken angeordnet und der mittlere Bodenwandungsabschnitt und die beiden vertikalen Bodenwandungsabschnitte sind in Waggonlängsrichtung gesehen zwischen den beiden Waggonkopfstücken angeordnet,
wobei vorzugsweise der mittlere Bodenwandungsabschnitt 15 bis 50 cm, bevorzugt 18 bis 24 cm oberhalb einer Schienenoberkante der Gleisanlage angeordnet ist, auf der der Güterwaggon in Waggonlängsrichtung hin- und her verfahrbar angeordnet ist.

Vorzugsweise sind die untere Abteilreihe in Waggonlängsrichtung gesehen zwischen den beiden Waggonkopfstücken angeordnet.

Die Aufgabe wird ferner gelöst durch eine Güterumschlagvorrichtung zum Be- und Entladen von Güterzügen mit losem Stückgut, insbesondere Containergut, insbesondere zum Umschlagen des losen Stückgutes, insbesondere des Containergutes, von der Straße, von Fabriken oder Herstellwerken zur Schiene und umgekehrt, mittels horizontaler Querverladung mittels von jeweils einem Waggonuntergestell eines Güterwaggons abnehmbaren, die Stückgüter aufnehmenden Waggonaufsätzen aufweisend:
a) eine Gleisanlage mit zwei Gleissträngen,
b) eine neben dem Gleis und parallel zu dieser angeordnete Verladebahn,
c) Hubeinrichtungen, vorzugsweise ortsfest, zum Anheben und Absenken der Waggonaufsätze von bzw. auf dem jeweiligen Waggonuntergestell
d) Zumindest eine Quertransporteinrichtung für den Quertransport der Waggonaufsätze von einem Güterwaggon auf die Verladebahn und umgekehrt mit jeweils zumindest einem, bevorzugt quer zur Gleisanlage verfahrbaren, Quertransportmittel,
wobei die Güterumschlagvorrichtung zumindest einen, vorzugsweise mehrere, erfindungsgemäße Güterwaggons aufweist.

Die Güterumschlagvorrichtung kann zudem wie nachfolgend angegeben ausgebildet sein, wobei alle bevorzugten Ausführungsformen für sich oder in Kombination im Rahmen der Erfindung möglich sein sollen:
Vorzugsweise weist die Güterumschlagvorrichtung mehrere, sich in eine Waggonquerrichtung quer zur Gleisanlage erstreckende, zweckmäßigerweise unterflur in Querrillen der Verladebahn angeordnete, Förderbahnen auf, wobei die Quertransportmittel Shuttlebalken sind, die jeweils auf einer der Förderbahnen in Waggonquerrichtung hin- und her verfahrbar gelagert sind, wobei die Shuttlebalken vorzugsweise jeweils Balkenhubeinrichtungen zum Anheben und Absenken des Waggonaufsatzes aufweisen.

Vorzugsweise weist die Güterumschlagvorrichtung pro Verriegelungseinrichtung eine Schwenk- und Entriegelungseinrichtung zum Lösen der Verriegelung der Waggonseitenwände und zum Auf- und Einklappen der Waggonseitenwände auf.

Vorzugsweise weist die Güterumschlagvorrichtung ein automatisiertes Be- und Entladegerät zum Be- und Entladen des Güterwaggons aufweist, wobei das Be- und Entladegerät bevorzugt ein Regalbediengerät ist, welches auf der der Gleisanlage abgewandten Seite der Verladebahn angeordnet ist und in Aufsatzlängsrichtung neben der Verladebahn hin- und her verfahrbar ist, wobei vorzugsweise auf der der Verladebahn abgewandten Seite des Regalbediengerätes ein Hochregallager angeordnet ist.

Vorzugsweise weist die Güterumschlagvorrichtung ein Transportmittel für die Behälter, insbesondere einen Routenzug oder Förderband oder eine Rollenbahn oder eine Rollenförderbahn auf, welches auf der der Gleisanlage abgewandten Seite der Verladebahn angeordnet ist.

Vorzugsweise weist die Güterumschlagvorrichtung Steuermittel, vorzugsweise einen Leitrechner, zur Steuerung des Be- und Entladens, insbesondere des Be- und Entladegerätes, auf, das mit dem Be- und Entladegerät in Signal übertragender Verbindung steht.

Die Aufgabe wird ferner gelöst durch ein Verfahren zur Entladung eines Güterzuges mit erfindungsgemäßen Güterwaggons, insbesondere unter Verwendung einer erfindungsgemäßen Güterumschlagvorrichtung, mit folgenden Verfahrensschritten:
a) Abheben der Waggonaufsätze von den Waggonuntergestellen
b) Transportieren der abgehobenen Waggonaufsätze zur Verladebahn und Absetzten auf der Verladebahn oder den Untersätzen,
c) Automatisiertes Entladen der Waggonaufsätze insbesondere automatisiertes Entnehmen der Behälter aus den Abteilen, mittels eines automatisierten Be- und Entladegerätes, insbesondere eines Regalbediengerätes,

Das Verfahren weist vorzugsweise folgende Verfahrensschritte auf:
a) Abheben der Waggonaufsätze von den Waggonuntergestellen
b) Entriegeln und Abklappen der Waggonseitenwände nach außen,
c) Verfahren von zumindest jeweils zwei Quertransporteinrichtungen, insbesondere der Shuttlebalken, unter jeweils einen Waggonaufsatz,
d) Absetzen der Waggonaufsätze auf den Quertransporteinrichtungen, insbesondere den Shuttlebalken,
e) Verfahren der Quertransporteinrichtungen, insbesondere der Shuttlebalken auf die Verladebahn,
f) Vorzugsweise Absetzen der Waggonaufsätze auf einer Unterlage, insbesondere der Verladebahn oder den Untersätzen,
g) Automatisiertes Entladen der Waggonaufsätze insbesondere automatisiertes Entnehmen der Behälter aus den Abteilen, mittels eines automatisierten Be- und Entladegerätes, insbesondere eines Regalbediengerätes, wobei vorzugsweise das Be- und Entladegerät mittels eines Steuermittels, bevorzugt des Leitrechners gesteuert wird.

Anhand der Zeichnung wird die Erfindung im Folgenden beispielhaft näher erläutert. Es zeigen:
- Figur 1:: Eine perspektivische, schematische Ansicht eines erfindungsgemäßen Güterwaggons mit erfindungsgemäßem Waggonaufsatz
- Figur 2:: Eine perspektivische, schematische Ansicht eines Abschnitts einer erfindungsgemäßen Güterumschlagvorrichtung gemäß in ihrer allgemeinen Ausführungsform mit einem Güterwaggon und abgeladenem Waggonaufsatz
- Figur 3:: Eine perspektivische, schematische Ansicht eines Abschnitts einer erfindungsgemäßen Güterumschlagvorrichtung mit einem abgeladenen Waggonaufsatz, einem Regalbediengerät und einem Hochregallager
- Figur 4:: Eine weitere perspektivische, schematische Ansicht der Güterumschlagvorrichtung gemäß Figur 3
- Figur 5:: Eine perspektivische, schematische Ansicht eines erfindungsgemäßen verfahrbaren Waggonaufsatzes neben einem Hochregallager
- Figur 6:: Eine perspektivische, schematische Ansicht des verfahrbaren Waggonaufsatzes gemäß Figur 5
- Figur 7:: Eine perspektivische, schematische Ansicht des erfindungsgemäßen Waggonaufsatzes mit teilweise geöffneten, hoch gefalteten Waggonaufsatzseitenabdeckungen
- Figur 8:: Eine perspektivische, schematische Ansicht eines Shuttlebalkens

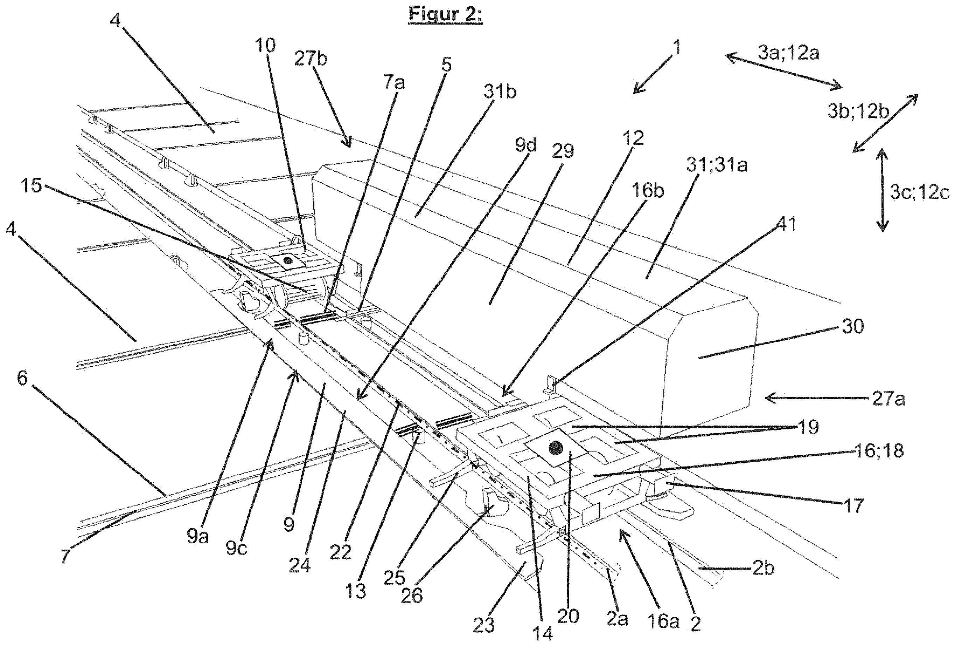

Die erfindungsgemäße Güterumschlagvorrichtung 1 (Fig. 2-5) dient zum Be- und Entladen von Güterzügen, insbesondere zum Umschlagen von Gütern von der Straße, von Fabriken oder Herstellwerken zur Schiene und umgekehrt, wobei das Umschlagen mittels schienengleicher Querverladung erfolgt. Dazu weist die Güterumschlagvorrichtung 1 zumindest eine Eisenbahnschiene bzw. Gleisanlage 2 mit zwei zueinander parallelen Schienensträngen bzw. Gleissträngen 2a;2b auf, auf denen die Güterzüge mit Lok (nicht dargestellt) und daran hängenden Schienenwaggons bzw. Güterwaggons 3 verfahrbar gelagert sind. Insbesondere beidseits neben und außerhalb der Gleisanlage 2 ist jeweils eine in etwa schienengleiche Verladebahn 4 vorgesehen. Schienengleich meint, dass die Bahnoberfläche der Verladebahn 4 der Höhe der Schienenoberkanten entspricht oder lediglich geringfügig, z.B. um 10 bis 50 cm höher ist. Im Gegensatz dazu wird beim Kranen die Ladung um ca. 5 m angehoben.

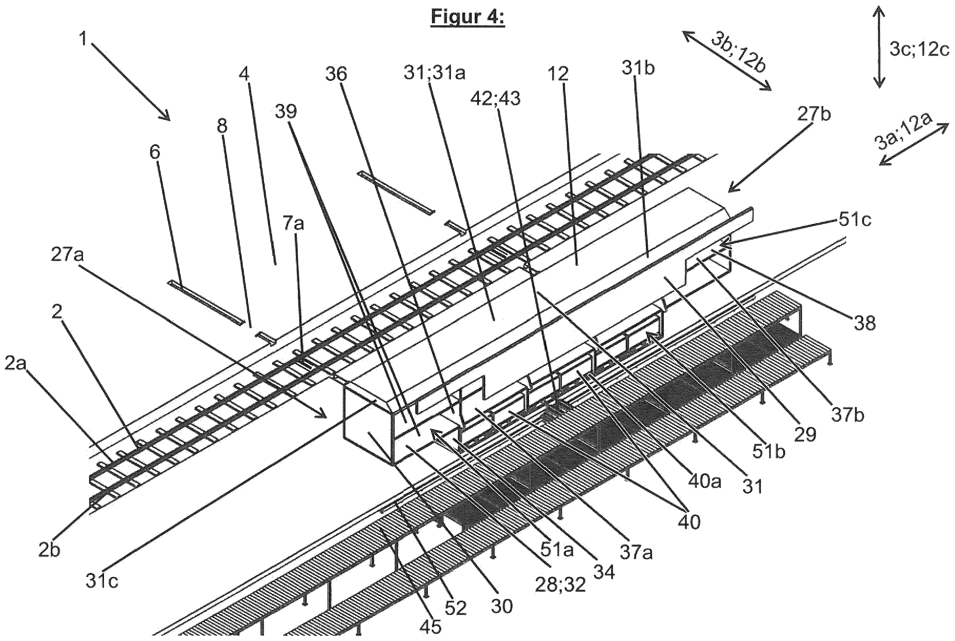

Die Güterumschlagvorrichtung 1 weist außerdem zumindest ein Quertransportmittel, insbesondere einen Shuttlebalken 5, auf, der quer, also senkrecht, zu den Gleissträngen 2a;2b unterflur in Querrillen 6 der Verladebahn 4 verfahrbar ist. Dazu sind in den Querrillen 6 Förderbahnen 7 vorhanden, auf denen die Shuttlebalken 5 quer zu den Gleissträngen 2a;2b verfahrbar sind, z.B. gleit- oder rollengelagert sind. Bei den Förderbahnen 7 kann es sich in an sich bekannter Weise um Tragschienen (gemäß WO 2007/104721 A1) handeln, auf denen auf denen die Shuttlebalken 5 quer zu den Gleissträngen 2a;2b verfahrbar sind, z.B. gleit- oder mit ihren Transportrollen rollengelagert sind. Alternativ dazu weisen die Förderbahnen 7 selber ortsfeste Transportrollen auf, auf denen die Shuttlebalken 5 rollengelagert sind (gemäß DE 10 2009 012 159 A1). Bevorzugt sind für jeden Güterwaggon 3 jeweils zwei Shuttlebalken 5 und vier Förderbahnen 7, nämlich je zwei auf jeder Seite der Gleisanlage 2, vorhanden. Die Förderbahnen 7 enden jeweils vor den Gleissträngen 2a;2b. Zwischen den beiden Gleissträngen 2a;2b sind aber Förderbahnenstücke 7a vorhanden, die in Fortsetzung der Förderbahnen 7 angeordnet sind, so dass die Shuttlebalken 5 von den Förderbahnen 7 auf die Förderbahnenstücke 7a verfahren können und umgekehrt. Dadurch können die Shuttlebalken 5 in an sich bekannter Weise unter einen Güterwaggon 3 fahren, worauf weiter unten näher eingegangen wird. Vor den Gleissträngen 2a;2b weisen die Förderbahnen 7 jeweils eine Lücke 8 (Fig. 4) auf, in die abgeklappte Waggonseitenwände 9 eines Waggonuntergestells 10 der Güterwaggons 3 zu liegen kommen, worauf ebenfalls weiter unten näher eingegangen wird.

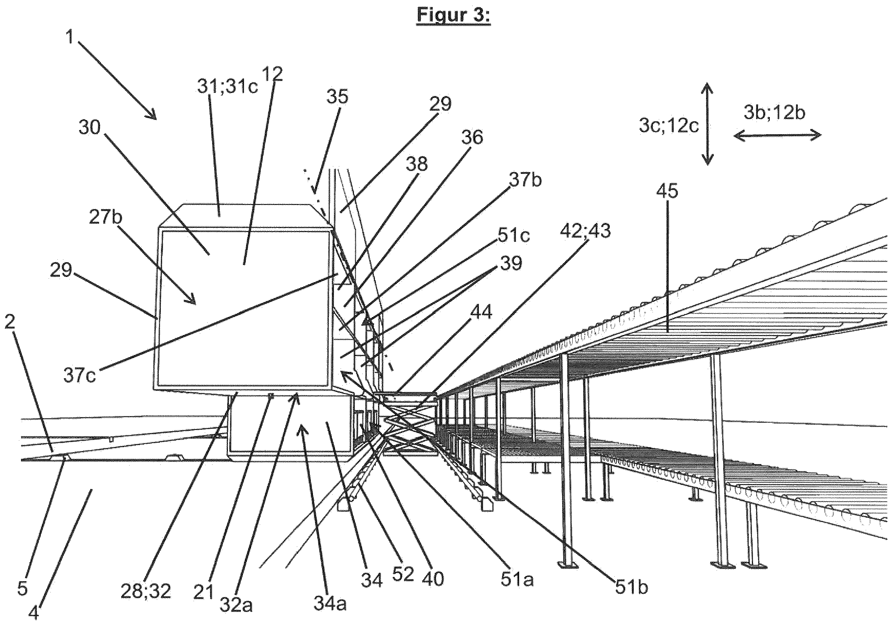

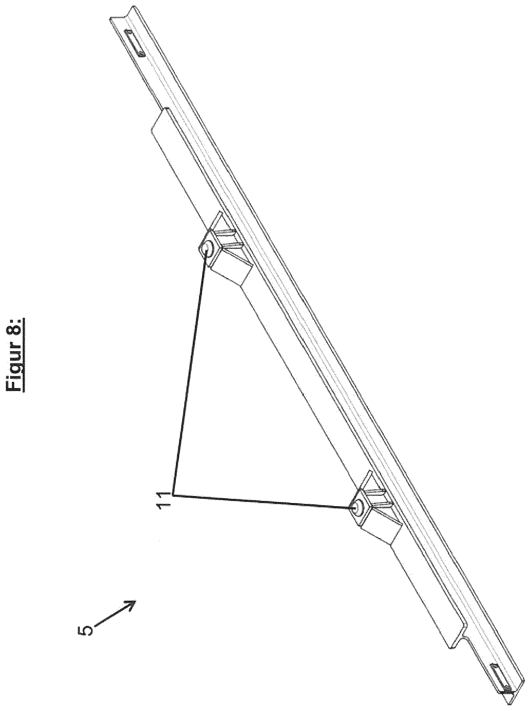

Die langgestreckt ausgebildeten Shuttlebalken 5 (Fig. 3,8) weisen in an sich bekannter Weise oberseitig Balkenhubeinrichtungen 11 auf, die zum Anheben eines erfindungsgemäßen Waggonaufsatzes 12 von der Verladebahn 4 und Absetzen auf der Verladebahn 4 dienen. Darauf wird ebenfalls weiter unten näher eingegangen.

Die Güterumschlagvorrichtung 1 weist außerdem mehrere ortsfeste Hubeinrichtungen 13 zum Anheben eines erfindungsgemäßen Waggonaufsatzes 12 von dem Waggonuntergestell 10 bzw. von den Shuttlebalken 5 und Absetzen auf dem Waggonuntergestell 10 bzw. auf den Shuttlebalken 5 auf. Die Hubeinrichtungen 13 sind vorzugsweise jeweils beidseits, jeweils verladebahnseitig, direkt neben Gleissträngen 2a;2b angeordnet. Die Hubeinrichtungen 13 sind somit nicht zwischen den beiden Gleissträngen 2a;2b, sondern außerhalb dieser angeordnet, aber vorzugsweise im Gleisbett. Bei den Hubeinrichtungen 13 handelt es sich vorzugsweise um mechanische Hubgetriebe, welche durch Kombination von Elektromotoren, Spindeln und Spindelmuttern angetrieben werden, alternativ um hydraulisch angetriebene Hubeinrichtungen 13.

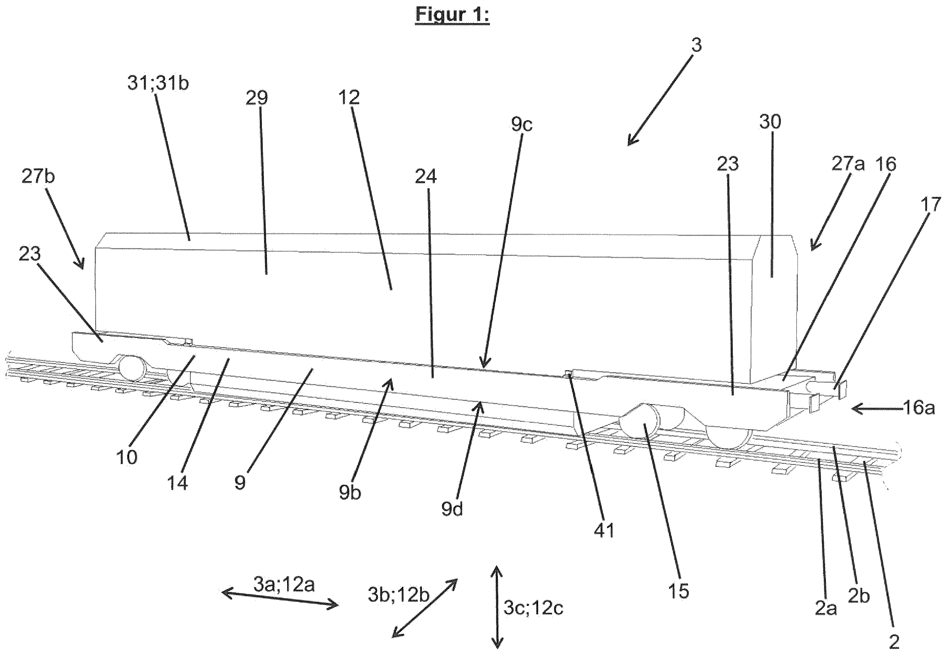

Bei dem erfindungsgemäßen Güterwaggon 3 (Fig. 1 und 2) handelt es sich um einen Flachwagen mit gedecktem bzw. geschlossenem Waggonaufsatz 12. Gemäß dem internationalen Eisenbahnverband UIC wird unter anderem unterschieden zwischen offenen Güterwaggons ohne Dach in Regelbauart (UIC-Gattung **E**) und Sonderbauart (UIC-Gattung: **F**) und gedeckten Güterwaggons mit festem Dach in Regelbauart (UIC Gattung **G**) und Sonderbauart (UIC-Gattung **H**) Eine weitere Waggonbauart sind Flachwagen, wiederum unter anderem unterteilt in Flachwagen mit Drehgestellen in Regelbauart (UIC R) oder in Sonderbauart (UIC Gattung S) Bei dem erfindungsgemäßen Güterwaggon 3 handelt es sich somit vorzugsweise um einen Güterwaggon 3 der UIC-Gattung S.

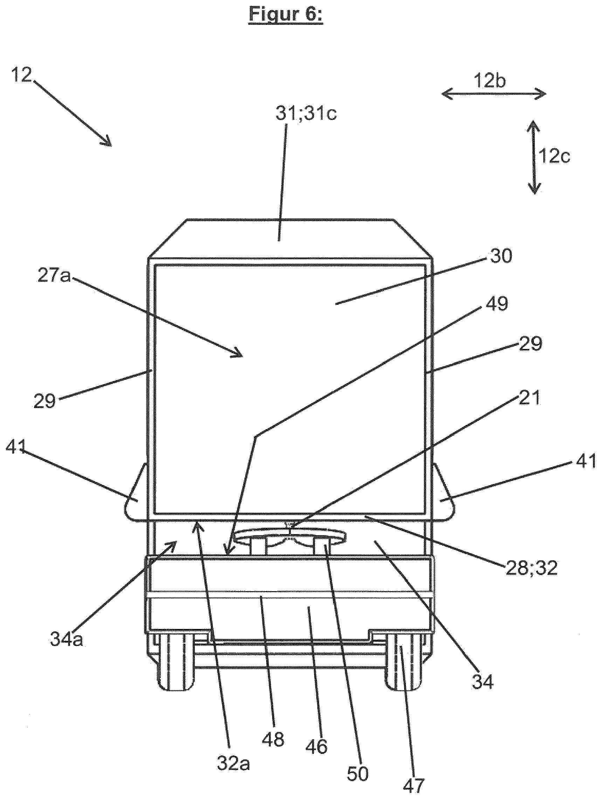

Ein erfindungsgemäßer Güterwaggon 3 (Fig. 1 und 2) weist jeweils das Waggonuntergestell 10 und den darauf aufgesetzten, insbesondere eingehängten, erfindungsgemäßen Waggonaufsatz 12 (Fig. 1-6) auf, der das zu transportierende Stückgut aufnimmt. Zudem weist der Güterwaggon 3 eine horizontale, sich parallel zu den Gleissträngen 2a;b erstreckende Waggonlängsrichtung 3a und eine dazu senkrechte, horizontale Waggonquerrichtung 3b, sowie eine vertikale Waggonhöhenrichtung 3c auf.

Das Waggonuntergestell 10 weist in an sich bekannter Weise einen Waggonrahmen 14 sowie zwei, insbesondere zweiachsige, in Waggonlängsrichtung 3a voneinander beabstandete Drehgestelle 15 zum Verfahren des Güterwaggons 3 auf der Gleisanlage 2 auf. Anstelle der Drehgestelle 15 können auch Einzelachsen (nicht dargestellt) vorhanden sein.

Der Waggonrahmen 14 weist zwei voneinander in Waggonlängsrichtung 3a beabstandete Vorbauten bzw. Waggonkopfstücke 16 auf, die jeweils stirnseitig bzw. endseitig, des Waggonuntergestells 10 angeordnet sind. Die beiden Waggonkopfstücke 16 lagern jeweils in an sich bekannter Weise auf einem der beiden Drehgestelle 15. Dabei sind die beiden Waggonkopfstücke 16 jeweils fest mit dem jeweiligen Drehgestell 15 verbunden.

Die beiden Waggonkopfstücke 16 eines Güterwaggons 3 weisen in Waggonlängsrichtung 3a gesehen zudem jeweils ein erstes, dem jeweils anderen Waggonkopfstück 16 abgewandtes, äußeres Kopfstückende 16a und ein zweites, dem jeweils anderen Waggonkopfstück 16 zugewandtes, inneres Kopfstückende 16b auf. Am äußeren Kopfstückende 16a weisen die Waggonkopfstücke 16 jeweils zwei an sich bekannte Puffer 17 auf. Des Weiteren weisen die beiden Waggonkopfstücke 16 jeweils ein, insbesondere quaderförmiges, Kopfstückrahmengestell 18 mit mehreren miteinander fest verbundenen, insbesondere verschweißten, Rahmenstreben bzw. Längs- und Querträgern 19 auf.

Des Weiteren befindet sich zudem oberseitig und zentral auf beiden Waggonkopfstücken 16 eine an sich bekannte Königszapfenarretierungseinrichtung 20 zur Aufnahme und Verriegelung bzw. Arretierung eines Königszapfens 21 des Waggonaufsatzes 12 in horizontaler und/oder vertikaler Richtung relativ zum Waggonuntergestell 10. Die Königszapfenarretierungseinrichtung 20 ist vorzugsweise gemäß der DE 10 2009 015 775 A1 ausgebildet. Das heißt die Königszapfenarretierungseinrichtung 20 weist ein Grundgestell und einen relativ zum Grundgestell höhenverstellbaren Aufnahmetisch auf, der eine Tischplatte mit einer horizontalen Tischplattenoberseite zur Aufnahme einer Auflagefläche des Waggonaufsatzes 12 aufweist. Zudem weist die Königszapfenarretierungseinrichtung 20 Arretierungsmittel zum horizontalen und/oder zum vertikalen Arretieren des Königszapfens auf, wobei durch Absenken des Waggonaufsatzes 12 über dem Güterwaggon 3 die horizontale und/oder die vertikale Arretierung selbsttätig aktivierbar ist bzw. sind und durch Anheben des Waggonaufsatzes 12 vom Güterwaggon 3 die horizontale und/oder die vertikale Arretierung selbsttätig lösbar ist bzw. sind.

Der Waggonrahmen 14 weist zudem die beiden Waggonseitenwände 9 (Fig. 1 und 2) auf. Diese verbinden die beiden Waggonkopfstücke 16 starr miteinander, also zueinander unverschieblich und unverdrehbar. Dabei sind die Waggonseitenwände 9 jeweils um eine zur Waggonlängsrichtung 3a parallele Seitenwandschwenkachse 22 an den Waggonkopfstücken 16 gelagert. Die beiden Seitenwandschwenkachsen 22 der beiden Waggonseitenwände 9 eines Güterwaggons 3 sind zueinander parallel und in Waggonquerrichtung 3b zueinander beabstandet und zueinander fluchtend.

Die beiden Waggonseitenwände 9 weisen jeweils eine Wandinnenseite 9a, eine dieser in Waggonquerrichtung 3b gegenüberliegende Wandaußenseite 9b, eine Wandoberkante 9c und eine Wandunterkante 9d auf. Außerdem weisen die beiden Waggonseitenwände 9 eines Güterwaggons 3 jeweils zwei endseitige Auflagerstege 23 und einen dazwischen angeordneten, mittigen Lastaufnahmesteg 24 auf. Die beiden Auflagestege 23 und der Lastaufnahmesteg 24 sind miteinander fest verbunden, insbesondere einstückig ausgebildet. Der Lastaufnahmesteg 24 dient zur Aufnahme bzw. Lagerung des Waggonaufsatzes 12.

Die beiden Auflagerstege 23 dienen zur schwenkbaren Lagerung der Waggonseitenwände 9 an den Waggonkopfstücken 16, insbesondere den Kopfstückrahmengestellen 18, um die jeweilige Seitenwandschwenkachse 22. Dazu weisen die Waggonseitenwände 9, insbesondere jeweils vier, Lagerarme 25 auf, die jeweils einendig mit den Auflagerstegen 23 fest, also unverschieblich und unverdrehbar, verbunden, insbesondere mit diesen verschweißt, sind. Jeder Auflagersteg 23 weist vorzugsweise zwei Lagerarme 25 auf. Die Lagerarme 25 erstrecken sich vorzugsweise von der Wandinnenseite 9a weg und nach unten über die Wandunterkante 9c hinaus.

Andernendig weisen die Lagerarme 25 jeweils ein Schwenklager zur verschwenkbaren Lagerung der Waggonseitenwände 9 um die jeweilige Seitenwandschwenkachse 22 auf. Die Waggonkopfstücke 16 weisen ebenfalls ein korrespondierendes Schwenklager auf.

Jeder Güterwaggon 3 weist zudem zumindest vier erste Verriegelungseinrichtungen (nicht dargestellt) zur Verriegelung bzw. Arretierung der Waggonseitenwände 9 in ihrer eingeklappten Stellung (Fig. 1) auf. Insbesondere sind für jede Waggonseitenwand 9 jeweils zumindest zwei erste Verriegelungseinrichtungen vorhanden, wobei jeweils eine erste Verriegelungseinrichtung pro Auflagersteg 23 vorhanden ist. Die Verriegelungseinrichtungen sind also jeweils im Bereich der Auflagerstege 23 angeordnet und verriegeln diese mit den Waggonkopfstücken 16. Zudem sind die Verriegelungseinrichtungen vorzugsweise gemäß der DE 10 2012 004 945 A1 ausgebildet.

Demgemäß weist eine erste Verriegelungseinrichtung zwei in Waggonlängsrichtung 3a hin- und her verfahrbare Verriegelungsbolzen auf. Die Verriegelungsbolzen sind die jeweils in Waggonlängsrichtung 3a hin- und her verschieblich an dem Kopfstückrahmengestell 18 gelagert. Zudem weisen die Verriegelungseinrichtungen jeweils zwei seitenwandfeste Verriegelungsgehäuse mit einer Verriegelungsaussparung auf. Die Verriegelungsbolzen können in die Verriegelungsaussparung einfahren und aus dieser heraus fahren. In der eingefahrenen Stellung ist die Waggonseitenwand 9 mit dem Waggonkopfstück 16 verriegelt. Für jeden Verrieglungsbolzen weist eine erste Verriegelungseinrichtung zudem jeweils einen, bevorzugt identischen, Hebelmechanismus zur Betätigung, also zum Ein-und Ausfahren, des Verriegelungsbolzens auf.

Vorzugsweise weist jeder Güterwaggon 3 zudem eine zweite Verriegelungseinrichtung gemäß der DE 10 2012 004 945 A1 auf, die durch Aufsetzen des Waggonaufsatzes 12 aktivierbar ist.

Zur Betätigung der ersten Verriegelungseinrichtungen weist die erfindungsgemäße Güterumschlagvorrichtung 1 jeweils eine Schwenk- und Entriegelungseinrichtung 26 (in Fig. 2 schematisch dargestellt) auf. Diese sind ebenfalls aus der DE 10 2012 004 945 A1 bekannt. Die Schwenk- und Entriegelungseinrichtungen 26 dienen zum Lösen der Verriegelung der Waggonseitenwände 9 durch die Verriegelungsbolzen sowie zum kontrollierten, geführten Auf- und Einklappen der Waggonseitenwände 9. Dabei ist für jede erste Verriegelungseinrichtung eine Schwenk- und Entriegelungseinrichtung 26 vorhanden. Eine Schwenk- und Entriegelungseinrichtung 26 weist jeweils zwei Betätigungshebel auf, welche die beiden Hebelmechanismen der ersten Verriegelungseinrichtung derart betätigen, dass die beiden Verriegelungsbolzen in ihre ausgefahrene Stellung verfahren werden. Zudem weist eine Schwenk- und Entriegelungseinrichtung 26 jeweils einen um eine zur Waggonlängsrichtung 3a parallele Schwenkachse verschwenkbaren Schwenkhebel auf, der die Waggonseitenwand 9 aufnimmt. Durch Verschwenken des Schwenkhebels kann die Waggonseitenwand 9 aus- und eingeklappt werden.

Wie bereits erläutert, dient das Waggonuntergestell 10 und insbesondere dienen die Waggonseitenwände 9 zur Aufnahme des erfindungsgemäßen Waggonaufsatzes 12. Dieser weist eine zur Waggonlängsrichtung 3a parallele Aufsatzlängsrichtung 12a, eine zur Waggonquerrichtung 3b parallele Aufsatzquerrichtung 12b und eine zur Waggonhöhenrichtung 3c parallele Aufsatzhöhenrichtung 12c auf. In Aufsatzlängsrichtung 12a gesehen weist der Waggonaufsatz 12 zudem ein erstes Aufsatzstirnende 27a und ein zweites Aufsatzstirnende 27b auf.

Wie bereits erläutert handelt es sich bei dem erfindungsgemäßen Güterwaggon 3 um einen geschlossenen Güterwaggon 3. Infolgedessen ist der Waggonaufsatz 12 geschlossen bzw. gedeckt bzw. bedeckt ausgebildet und weist eine Aufsatzbodenwandung 28, zwei Aufsatzseitenabdeckungen 29, zwei Aufsatzstirnwände 30 und ein geschlossenes Aufsatzdach 31 auf. Die Aufsatzbodenwandung 28, die Aufsatzseitenabdeckungen 29, die Aufsatzstirnwände 30 und das Aufsatzdach 31 begrenzen einen Waggonaufsatzinnenraum 38 des Waggonaufsatzes 12 bzw. schließen diesen nach außen ab.

Die Aufsatzbodenwandung 28, bevorzugt zumindest eine der beiden Aufsatzseitenabdeckungen 29, und die beiden Aufsatzstirnwandungen 30 sind vorzugsweise massiv aus Metallblech, insbesondere mit Versteifungsrippen, ausgebildet. Denn diese Bauteile haben eine tragende Funktion. Dabei müssen diese Bauteile aber nicht zwangsweise massiv ausgebildet sein, sondern können auch anderweitig tragend ausgebildet sein.

Das Aufsatzdach 31 kann ebenfalls derart ausgebildet sein. Alternativ handelt es sich bei dem Aufsatzdach 31 um eine Plane oder eine Kombination eines Stab-Fachwerkes mit einer darüber gezogenen Plane. Zudem muss das Aufsatzdach 31 nicht vollständig eben ausgebildet sein, sondern kann z.B. einen ebenen, mittigen Dachabschnitt 31a aufweisen, der sich über zwei schräge, äußere bzw. seitliche Dachabschnitte 31b an die jeweilige Aufsatzseitenabdeckung 29 anschließt und über zwei schräge, stirnseitige Dachabschnitte 31c an die jeweilige Aufsatzstirnwandung 30 anschließt. Die seitlichen Dachabschnitte 31b schließen sich beidseits in Aufsatzquerrichtung 12b an den mittigen Dachabschnitt 31a an. Die stirnseitigen Dachabschnitte 31c schließen sich beidseits in Aufsatzlängsrichtung 12c an den mittigen Dachabschnitt 31a an.

Die den Waggonaufsatz 12 nach unten und außen begrenzende Aufsatzbodenwandung 28 ist vorzugsweise gestuft ausgebildet und weist zwei horizontale, stirnendseitige Bodenwandabschnitte 32, einen mittigen, horizontalen Bodenwandabschnitt 33 und zwei, insbesondere vertikale, Bodenwandabschnitte 34 auf, welche jeweils einen der beiden stirnendseitigen Bodenwandabschnitte 32 mit dem mittigen Bodenwandabschnitt 33 verbinden. In Aufsatzlängsrichtung 12a gesehen ist der mittige Bodenwandabschnitt 33 zwischen den beiden stirnendseitigen Bodenwandabschnitten 32 angeordnet. Die Aufsatzbodenwandung 28 ist somit in Aufsatzlängsrichtung 12a gestuft ausgebildet. Zudem ist der mittige Bodenwandungsabschnitt 33 relativ zu den beiden stirnseitigen Bodenwandungsabschnitten 32 in Aufsatzhöhenrichtung 12c gesehen nach unten versetzt angeordnet. Der mittige Bodenwandungsabschnitt 33 ist also tiefer angeordnet als die beiden stirnseitigen Bodenwandungsabschnitte 32.

In Aufsatzquerrichtung 12b erstrecken sich die Bodenwandungsabschnitte 32;33;34 jeweils über die gesamte Breite bzw. Quererstreckung des Waggonaufsatzes 12.

Die Bodenwandungsabschnitte 32;33;34 weisen zudem jeweils eine Abschnittsaußenseite 32a;33a;34a und eine Abschnittsinnenseite 32b;33b;34b auf. Die beiden stirnseitigen Bodenwandungsabschnitte 32 weisen jeweils einen Königszapfen 21 auf, der von der Abschnittsaußenseite 32a des stirnseitigen Bodenwandungsabschnittes 32 vertikal nach unten absteht.

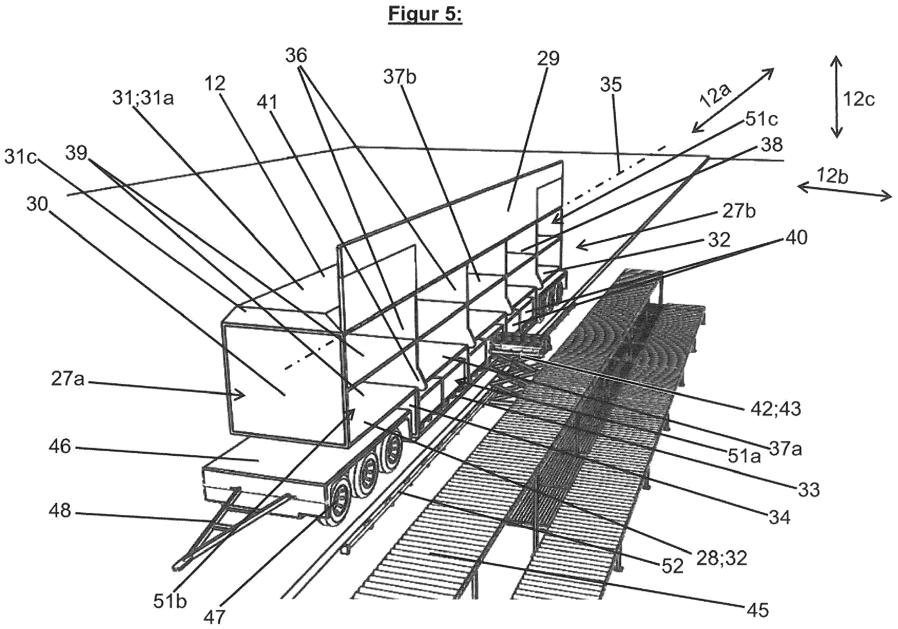

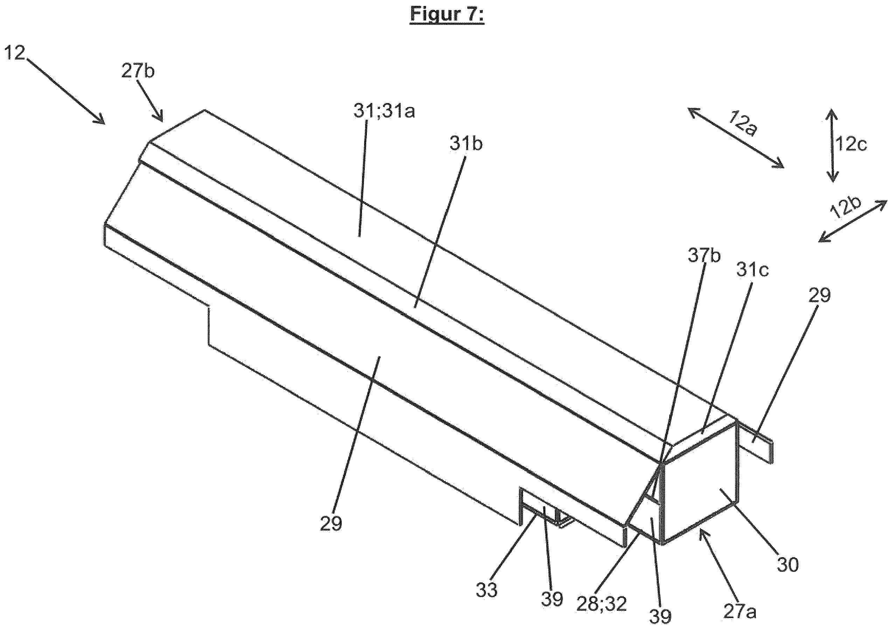

Die beiden Aufsatzseitenabdeckungen 29 sind vorzugsweise senkrecht zur Aufsatzquerrichtung 12b ausgebildet. Sie schließen den Waggonaufsatz 12 jeweils seitlich ab. Infolgedessen schließen sie sich jeweils an die Aufsatzbodenwandung 28, die beiden Aufsatzstirnwände 30 und das Aufsatzdach 31 an. Zudem ist zumindest eine der beiden Aufsatzseitenabdeckungen 30 öffenbar. Beispielsweise ist die Aufsatzseitenabdeckung 29 massiv aus Metallblech ausgebildet und aufklappbar, wobei sie vorzugsweise um eine zur Aufsatzlängsrichtung 12a parallele Aufsatzseitenwandschwenkachse 35 nach oben klappbar bzw. schwenkbar ist (siehe Fig. 3,5). Die massive, wandartige Aufsatzseitenabdeckung 29 kann aber auch zusätzlich faltbar (siehe Fig. 4,7) sein oder mehrteilig aus mehreren öffenbaren Klappen bestehen (nicht dargestellt).

Wie bereits erläutert, muss die öffenbare Aufsatzseitenabdeckung 29 aber nicht massiv aus Metallblech ausgebildet sein. Sie kann z.B. auch als aufrollbare oder zusammenfaltbare Plane mit oder ohne Stäbe oder anders ausgeführt sein.

Zum Öffnen weist der Waggonaufsatz 12 vorzugsweise eine geeignete Aufsatzseitenabdeckungsöffnungseinrichtung auf. Mit der Aufsatzseitenabdeckungsöffnungseinrichtung steht die Aufsatzseitenabdeckung 29 öffenbar und wieder schließbar in Verbindung. Die notwendige Antriebenergie wird z.B. induktiv oder mittels einer mechanischen, z.B. einer schleifenden oder steckenden, Kontaktierung mit einer Stromquelle bereit gestellt. Entsprechende Kontaktelemente sind dann jeweils am Waggonaufsatz 12 und in der Güterumschlagvorrichtung 1 vorhanden.

Alternativ weist die Güterumschlagvorrichtung 1 eine externe, also nicht mit dem Waggonaufsatz 12 fest verbundene, Aufsatzseitenabdeckungsöffnungseinrichtung (nicht dargestellt) auf, mit welcher die Aufsatzseitenabdeckung 29 öffenbar und wieder schließbar in Verbindung bringbar ist. Dies kann z.B. per Übertragung eines Drehmomentes eines externen Elektroantriebes per formschlüssiger, aber trennbarer Kupplung auf ein Öffnungsgetriebe der Aufsatzseitenabdeckung 29, welches im Waggonaufsatz 12 angeordnet ist, erfolgen.

Das Öffnen kann aber auch manuell erfolgen.

Die beiden Aufsatzstirnwände 30 sind vorzugsweise senkrecht zur Aufsatzlängsrichtung 12a ausgebildet. Sie schließen den Waggonaufsatz 12 zudem an jeweils an einem der beiden Aufsatzstirnenden 27a;b ab. Zudem schließen sich die beiden Aufsatzstirnwände 30 jeweils an die Aufsatzbodenwand 28, insbesondere die stirnseitigen Bodenwandungsabschnitte 32, die beiden Aufsatzseitenabdeckungen 29 und das Aufsatzdach 31 an.

Erfindungsgemäß weist der Waggonaufsatz 12 zudem mehrere (Fig. 3-7), vorzugsweise zwei (Fig. 1 und 2) Auflageelemente 41, insbesondere feste oder klappbare Winkelelemente aus Metall, bevorzugt Stahlwinkel, auf, mit welchen der Waggonaufsatz 12 direkt auf den Waggonseitenwänden 9, insbesondere der Wandoberkante 9c, aufliegt. Die Auflageelemente 41 stehen in Aufsatzquerrichtung 12b über die Aufsatzseitenabdeckungen 29 nach außen über. Eine horizontale Auflagefläche der beiden Aufsatzelemente 41, welche auf der Wandoberkante 9c aufliegt, ist vorzugsweise im Wesentlichen auf Höhe der stirnseitigen Bodenwandungsabschnitte 32 angeordnet. Die beiden Auflageelemente 41 sind vorzugsweise mit den vertikalen Bodenwandungsabschnitten 34 fest verbunden und außenseitig an diese angeformt.

Erfindungsgemäß weist der Waggonaufsatz 12 zudem zumindest eine vertikale Zwischenwand 36 und zumindest einen horizontalen Zwischenboden 37a;b;c auf. Vorzugsweise weist der Waggonaufsatz 12 mehrere vertikale, zur Aufsatzlängsrichtung 12a senkrechte Zwischenwände 36 und mehrere horizontale Zwischenböden 37a;b;c auf. Die Zwischenwände 36 und die Zwischenböden 37a;b;c unterteilen den Waggonaufsatzinnenraum 38 in einzelne, bevorzugt quaderförmige, Kompartments bzw. Fächer bzw. Abteile 39. Zudem bestehen die Zwischenwände 36 und Zwischenböden 37a;b;c vorzugsweise aus Metall oder Kunststoff und sind bevorzugt massiv oder als Gitter ausgebildet.

Vorzugsweise weist der Waggonaufsatz 12 einen ersten, unteren horizontalen Zwischenboden 37a auf, welcher auf gleicher Höhe wie die beiden stirnseitigen Bodenwandungsabschnitte 32 angeordnet ist und sich an diese anschließt. Zudem ist ein zweiter, mittlerer horizontaler Zwischenboden 37b vorhanden, welcher oberhalb des ersten Zwischenbodens 37a angeordnet ist. Außerdem ist vorzugsweise ein oberer, dritter horizontaler Zwischenboden 37c vorhanden, welcher oberhalb des zweiten Zwischenbodens 37b und am oberen Ende der beiden Aufsatzstirnwandungen 30 angeordnet ist.

Die Zwischenböden 37a;b;c erstrecken sich vorzugsweise jeweils über die gesamte Länge des Waggonaufsatzes 12. Zudem sind mehrere in Aufsatzlängsrichtung 12a zueinander benachbarte, vertikale Zwischenwände 36 vorhanden. Diese Erstrecken sich vorzugsweise durchgehend über die gesamte Höhe des Waggonaufsatzes 12. Dadurch weist der Waggonaufsatz 12 in Aufsatzhöhenrichtung 12c gesehen drei übereinander angeordnete, horizontale Abteilreihen 51a;51b;51c, nämlich eine untere Abteilreihe 51a, eine mittlere Abteilreihe 51b und eine obere Abteilreihe 51c auf. Zudem wird zwischen dem dritten Zwischenboden 37c und dem Aufsatzdach 31 ein Stauraum gebildet, in dem z.B. die Aufsatzseitenabdeckungsantriebseinrichtung und/oder eine Lüftung oder Kühlung angeordnet sein kann. Eine Abteilreihe 51a;51b;51c weist jeweils mehrere in Aufsatzlängsrichtung 12a zueinander benachbarte, gleich hohe, Abteile 39 auf. Die untere Abteilreihe 51a wird zudem unten begrenzt von dem mittigen Bodenwandungsabschnitt 33, oben von dem unteren Zwischenboden 37a sowie stirnseitig von den beiden vertikalen Bodenwandungsabschnitten 34. Die mittlere Abteilreihe 51b wird unten begrenzt von dem unteren Zwischenboden 37a, oben von dem mittleren Zwischenboden 37b sowie stirnseitig von den beiden vertikalen Aufsatzstirnwänden 30. Die obere Abteilreihe 51c wird unten begrenzt von dem mittleren Zwischenboden 37b, oben von dem oberen Zwischenboden 37b sowie stirnseitig von den beiden vertikalen Aufsatzstirnwänden 30.

Die untere Abteilreihe 51a ist somit in Waggonlängsrichtung 12a gesehen nach kürzer ausgebildet als die beiden darüber angeordneten Abteilreihen 51b;c. Die beiden Abteilreihen 51b;c kragen in Waggonlängsrichtung 12a gesehen an beiden Aufsatzstirnenden 27a;b über die untere Abteilreihe 51a hinaus. Bzw. die untere Abteilreihe 51a ist in Bezug zu den beiden anderen Abteilreihen 51b;c an beiden Aufsatzstirnenden 27a;b nach innen versetzt. Dies wird insbesondere durch den gestuften Verlauf der Aufsatzbodenwandung 28 ermöglicht.

Die einzelnen Abteile 39 weisen vorzugsweise folgende Abmessungen auf:

| | | bevorzugt |
|---|---|---|
| | [cm] | [cm] |
| Innenlänge | 200 bis 400 | 300 bis 340 |
| Innenbreite | 240 bis 260 | 250 bis 255 |
| Innenhöhe | 80 bis 140 | 105 bis 120 |

Das heißt, der erfindungsgemäße Waggonaufsatz 12 weist vorzugsweise eine maximale freie Innenhöhe (welche sich aus der Summe der Innenhöhen der übereinander angeordneten Abteile 39 ergibt), von mindestens 3 m, bevorzugt von 3 bis 4 m auf, bevorzugt 3 bis 3,30 m. Das heißt, die vorzugsweise jeweils gleich hohen Abteile 39 weisen im Fall von drei Abteilreihen 51a;51b;51c vorzugsweise jeweils eine freie Innenhöhe von 1 bis 1,33 m, bevorzugt 1 bis 1,1 m auf.

Die einzelnen Abteile 39 dienen zur Aufnahme von quaderförmigen Behältern bzw. Boxen bzw. Kästen 40 oder dergleichen, welche mit losem Transportgut bzw. Containergut befüllt sind. Insbesondere handelt es sich bei den Behältern 40 um Gitterboxen. Die Behälter 40 sind offen oder oben offen, weisen also keinen Deckel auf. Zudem weisen die Behälter 40 mehrere Behälterstellfüße 40a auf zum Aufstellen der Behälter 40 auf einem Untergrund. Dadurch ist eine Behälterbodenwand von dem Untergrund beabstandet und der Behälter 40 kann von einem Gabelstapler oder Regalbediengerät gegriffen werden.

Die Behälter 40 sind zudem vorzugsweise genormt. Bei der Norm kann es sich um eine internationale oder nationale Norm oder eine interne Werksnorm eines Herstellers oder eines Nutzer des erfindungsgemäßen Waggonaufsatzes 12 handeln. Bevorzugt sind die Behälter 40 Gitterboxen, welche gemäß DIN EN 1362:1998-03 oder DIN 15155:1986-12 genormt sind.

Die Behälter 40 sind in Waggonlängsrichtung 12a formschlüssig mit wenigen Zentimetern, insbesondere 1-2 cm, Luft pro Zwischenraum als Toleranz in den Abteilen 39 angeordnet und dadurch automatisch durch die vertikalen Zwischenwände 36 gegen Verrutschen in Waggonlängsrichtung 3a bzw. Aufsatzlängsrichtung 12a gesichert. Zwischenräume existieren zwischen zueinander benachbarten Behältern 40 und zwischen einem Behälter 40 und der jeweiligen das Abteil begrenzenden Zwischenwand 36 oder Aufsatzstirnwand 30 oder dem jeweiligen vertikalen Bodenwandungsabschnitt 34. Die Gesamttolerenz pro Abteil 39 liegt also bei 4 bis 8 cm. Bzw. die Gesamtlänge (Summe der einzelnen Längen) der in Aufsatzlängsrichtung 12a nebeneinander angeordneten Behälter 40 eines Abteils 39 ist 4 bis 8 cm kleiner als die Innenlänge des Abteils 39. Das heißt, die Erstreckung der Behälter 40 in Waggonlängsrichtung 12a entspricht bis auf wenige Zentimeter Toleranz, so dass ohne Klemmen geladen werden kann, der Erstreckung des jeweiligen Abteils 39 in Waggonlängsrichtung 12a, in dem der Behälter 40 angeordnet ist. Dadurch wird auch beim Verrutschen der Behälter 40 während der Fahrt sichergestellt, dass die Behälter 40 beim Entladen noch gezielt gegriffen werden können.

Gleiches gilt für die Waggonquerrichtung 12b. Sind mehrere Behälter 40 in einem Abteil 39 angeordnet, sind deren Gesamtabmessungen entsprechend auf die Abmessungen des Abteils 39 abgestimmt. Dabei können sowohl in Aufsatzlängsrichtung 12a als auch in Aufsatzquerrichtung 12b gesehen mehrere, insbesondere jeweils zwei, Behälter 40 nebeneinander in demselben Abteil 39 angeordnet sein.

Dabei sind die Außenabmessungen des erfindungsgemäßen Waggonaufsatzes 12 vorzugsweise so bemessen, dass der erfindungsgemäße Güterwaggon 3 entweder eines oder mehrere der von den europäischen Infrastrukturbetreibern vorgeschriebene Lademaße, insbesondere das Lademaß der Deutschen Bahn nach Anhang II Tafel 1.4 der internationalen Vereinbarung für den Einsatz von Güterwagen (RIV von 2006), und/oder das Lademaß der SBB nach Tafel 1.6 der Anlage II der RIV, und/oder die Fahrzeugeinschränkungen die sich nach einer oder mehreren der in der europäischen "Technischen Spezifikation Interoperabilität Güterwaggons (TSI), Entscheidung der EU-Kommission 2006/861/EG, Aktenzeichen K(2006) 3345, festgelegten kinematischen Bezugslinien insbesondere Bezugslinien G1,G2, GA,GB,GC, GB1,GB2, 3.3 oder anderen ergeben. Die Wahl des Lademaßes oder der genutzten Bezugslinie richtet sich dabei nach dem Einsatzgebiet in Europa oder der Art der Zulassung des Waggonaufsatzes, die sowohl als Ladung betrachtet oder als zugehöriger Bestandteil zum erfindungsgemäßen Schienenwaggon zugelassen werden kann.

Vorzugsweise weist der Waggonaufsatz 12 folgende Außenabmessungen auf:

| | | bevorzugt |
|---|---|---|
| | [m] | [m] |
| Länge | 15 bis 20 | 17 |
| Breite (Auflageelemente nicht mitgerechnet) | 2,6 bis 2,9 | 2,65 |
| Höhe | 3,8 bis 4,5 | 4 |

Gemäß der Erfindung weist der Waggonaufsatz 12 zudem zumindest einen, insbesondere mobilen, Datenträger, z.B. einen RFID-Chip oder einen Barcode oder "QR-Codes" auf. Auf dem Datenträger sind unter anderem Informationen bezüglich der Ladung des Waggonaufsatzes 12 enthalten, z.B. Stückzahl, Gewicht, Teilenummern etc.. Vor allem aber enthält der Datenträger Informationen darüber, mit welcher Ladung die einzelnen Abteile 39 des Waggonaufsatzes belegt sind, optional zusätzlich die geometrischen Eigenschaften der Abteile 39. Falls die Abteile 39 genormt sind, ist dies nicht notwendig. Das heißt es sind genaue Informationen darüber enthalten, was jeder einzelne Behälter 40 enthält und wo dieser angeordnet ist. Aufgrund der Einteilung in die einzelnen Abteile 39 ist die Informationen bezüglich des Stellplatzes sehr einfach und genau speicherbar. Der Waggonaufsatz 12 kann zusätzlich oder alternativ zudem Referenzpunkte, insbesondere Sichtmarken aufweisen, die von einem Be- und Entladegerät 42 automatisch mittels einer Auswertesoftware in einem digitalen Kamerabild erkannt werden. Die Sichtmarken können als entsprechend aus Punkten, Rechtecken, Geraden und Kreisen gestaltete Markierungen insbesondere an den Schnittpunkten zwischen vertikalen und horizontalen Begrenzungswänden der Abteile 39 angeordnet sein.

Bei dem Be- und Entladegerät 42 handelt es sich vorzugsweise um ein an sich bekanntes Regalbediengerät 43 (Fig. 3-5). Ein Regalbediengerät (RBG) ist ein schienengeführtes, einspuriges Fahrzeug zur Bedienung der Waren in einem Hochregallager. Es gibt Regalbediengeräte, die über ein Weichensystem das gesamte Lager bzw. Werk bedienen können bzw. mit einem Umsetzer die Gasse wechseln und solche, die nur in einem Gang operieren (gassengebundene Regalbediengeräte). Der Automatisierungsgrad reicht je nach Anwendungsfall von manuell bis vollständig automatisiert. Das im Rahmen des erfindungsgemäßen Güterumschlagverfahrens eingesetzte Regalbediengerät 43 ist vollständig automatisiert.

Das Regalbediengerät 43 weist zumindest zwei horizontale Zinken 44 zur Aufnahme der Behälter 40 auf. Die beiden Zinken 44 sind in Aufsatzquerrichtung 12b teleskopierend verfahrbar. Dazu weist das Regalbediengerät 43 entsprechende Antriebsmittel auf. Vorzugsweise sind die Zinken 44 beidseitig telekopierbar. Das heißt, die Zinken 44 können nicht nur in Richtung auf den Waggonaufsatz 12 zu ausgefahren werden, sondern auch in die entgegengesetzte Richtung. Zudem sind die Zinken 44 auch in Aufsatzhöhenrichtung 12c hin- und her verfahrbar mittels entsprechender Antriebsmittel. Das Regalbediengerät 43 ist zudem neben der Verladebahn 4, auf deren der Gleisanlage 2 abgewandten Seite, in Waggonlängsrichtung 3a bzw. Aufsatzlängsrichtung 12a auf Schienen 52 hin -und her verfahrbar angeordnet. Dazu sind ebenfalls geeignete Antriebsmittel vorhanden.

Des Weiteren weist das Regalbediengerät 43 eine Steuereinrichtung zum Steuern des Verfahrens des Regalbediengerätes 43 und zum Steuern der Bewegung der Zinken 44 auf. Die Steuereinrichtung kann z.B. mit einem Leitrechner in signalübertragender Verbindung stehen oder die Daten über den Inhalt des Waggonaufsatzes 12 an externe Datenverarbeitungseinrichtungen weitergeben. Auch weist das Regalbediengerät 43 Mittel zum Auslesen des Datenträgers des Waggonaufsatzes 12 und/oder Mittel zur Erkennung der Referenzpunkte auf. Bei diesen Mitteln handelt es sich insbesondere um optische Mittel, z.B. digitale Kameras, oder um Magnetsensoren oder um Ultraschall-Abstandssensoren. Diese Mittel stehen mit der Steuereinrichtung in signalübertragender Verbindung.

Im Folgenden wird nun das erfindungsgemäße Güterumschlagverfahren näher erläutert:
Solange sich kein Güterzug in der erfindungsgemäßen Güterumschlagvorrichtung 1 befindet, befinden sich die Schwenk- und Entriegelungsvorrichtungen 26 in ihrer nicht betätigten, wartenden Ausgangsstellung. In der Ausgangstellung sind die Schwenk- und Entriegelungseinrichtungen 26 von der Gleisanlage 2 weg gefahren. Das heißt, die Schwenk- und Entriegelungseinrichtungen 26 liegen nicht im Verfahrweg (Lichtraumprofil) der Güterwaggons 3. Zudem befinden sich sowohl der Schwenkhebel als auch die Betätigungshebel der Schwenk- und Entriegelungseinrichtungen 26 in ihrer nicht betätigten Ausgangstellung.

Die Shuttlebalken 5 befinden sich auf der Verladebahn 4.

Die Güterumschlagvorrichtung kann dabei in einem Werk oder einer Fabrik oder einem Logistik- oder Güterverteilzentrum oder dergleichen angeordnet sein.

Nun fährt ein Güterzug mit mehreren Güterwaggons 3 in die Güterumschlagvorrichtung 1 ein. Jeder Güterwaggon 3 enthält einen auf das Waggonuntergestell 10 aufgesetzten, erfindungsgemäßen Waggonaufsatz 12. Die Auflageelemente 41 des Waggonaufsatzes 12 liegen dabei auf den Wandoberkanten 9b der beiden Waggonseitenwände 9 auf. Zudem sind die beiden Königszapfen 21 in den beiden Königszapfenarretierungseinrichtungen 20 angeordnet und werden von diesen verriegelt. Dadurch ist der Waggonaufsatz 12 in horizontaler Richtung mit dem Waggonuntergestell 10 verriegelt.

Die beiden stirnseitigen Bodenwandungsabschnitte 32 sind somit über den beiden Waggonkopfstücken 16 angeordnet. Die untere Abteilreihe 51b ist jedoch in Waggonlängsrichtung 12a gesehen zwischen den beiden Waggonkopfstücken 16 angeordnet. Bzw. der mittlere Bodenwandungsabschnitt 33 und die beiden vertikalen Bodenwandungsabschnitte 34 sind in Waggonlängsrichtung 12a gesehen zwischen den beiden Waggonkopfstücken 16 angeordnet. Der mittlere Bodenwandungsabschnitt 33 ist dabei knapp oberhalb der Schienenoberkante der Gleisanlage 2 angeordnet, insbesondere 15 bis 50 cm, bevorzugt 18 bis 24 cm darüber.

Der Güterzug fährt nun in die Güterumschlagvorrichtung 1 ein und überfährt dabei die gleisbettgebundenen Hubeinrichtungen 13. Sobald nun der Güterzug mit den Güterwaggons 3 in der erfindungsgemäßen Güterumschlagvorrichtung 1 angehalten hat, werden die Waggonaufsätze 12 mittels der ortsfesten Hubeinrichtungen 13 von den Waggonuntergestellen 10 abgehoben. Diese greifen an dem mittleren Bodenwandungsabschnitt 33 an. Dabei werden die zweiten Verriegelungseinrichtungen, falls vorhanden, durch das Abheben automatisch entriegelt.

Vorzugsweise gleichzeitig bzw. kurz danach werden die Schwenk- und Entriegelungseinrichtungen 26 in Waggonquerrichtung 3b zu den wartenden Güterwaggons 3 hin gefahren. Nun werden die Schwenk- und Entriegelungseinrichtungen 26 derart betätigt, dass die Betätigungshebel die Verriegelungsbolzen in ihre nicht verriegelnde Stellung antreiben. Die Waggonseitenwände 9 werden somit entriegelt. Gleichzeitig schwenken die Schwenkhebel soweit nach oben, bis sie an der Waggonseitenwand 9 außenseitig anliegen. Dadurch wird verhindert, dass die Waggonseitenwände 9 unkontrolliert nach außen weg klappen. Nun werden die Schwenkhebel nach unten verschwenkt und die darauf vorzugsweise allein aufgrund der Schwerkraft aufliegenden Waggonseitenwände 9 nach außen weg geklappt.

Wenn die Waggonseitenwände 9 vollständig ausgeklappt sind, befinden sie sich in den oben beschriebenen Lücken 8 der Förderbahnen 7. Infolgedessen können die Waggonseitenwände 9 nun von den Shuttlebalken 5 überfahren werden. Diese werden nun aktiviert und fahren in Waggonquerrichtung 3b über die weggeklappten Waggonseitenwände 9 hinweg unter die Waggonaufsätze 12. Die Balkenhubeinrichtungen 11 sind dabei ausgefahren. Dann werden die Waggonaufsätze 12 mittels der Hubeinrichtungen 13 auf den Balkenhubeinrichtungen 11 der Shuttlebalken 5 abgesetzt. Die mit den Waggonaufsätzen 12 beladenen Shuttlebalken 5 werden in Waggonquerrichtung 3b über die weggeklappten Waggonseitenwände 9 hinweg von dem Waggonuntergestell 10 weg und zur Verladebahn 4 hin gefahren. Dort werden die Waggonaufsätze 12 in an sich bekannter Weise mittels der Balkenhubeinrichtungen 11 abgesenkt und auf der Verladebahn 4 abgesetzt.

Die in dem Waggonaufsatz 12 enthaltende Ladung kann nun auf verschiedene Arten nach dem Entladen des Waggonaufsatzes 12 von dem Waggonuntergestell 10 weiter transportiert werden:
Gemäß einer Variante weist die Güterumschlagvorrichtung 1 wie oben beschrieben ein Regalbediengerät 43 auf, welches auf der der Gleisanlage 2 abgewandten Seite der Verladebahn 4 angeordnet ist und in Aufsatzlängsrichtung 12a hin- und her verfahrbar ist. Auf der der Verladebahn 4 abgewandten Seite des Regalbediengerätes 43 ist ein Hochregallager 45 angeordnet. Das Regalbediengerät 43 verfährt nun automatisiert, gesteuert mittels seiner Steuereinrichtung, zu dem Waggonaufsatz 12 hin und liest den Datenträger aus. Alternativ wird der Datenträger des Waggonaufsatzes direkt von einem Lesegerät ausgelesen, welches unabhängig vom Regalbediengerät 43 an oder in oder neben der Verladebahn 4 angeordnet ist oder als bewegliches Lesegerät von einer Bedienperson an den Waggonaufsatz 12 gehalten wird oder mit einer Kabelverbindung an den Waggonaufsatz 12 angesteckt wird. Nach dem Öffnen der Aufsatzseitenabdeckung 29 beginnt das Regalbediengerät 43 mit dem automatisierten, gesteuerten, einzelnen Entladen der einzelnen Behälter 40. Die Behälter 40 werden aus dem Waggonaufsatz 12 entnommen und an einer vorbestimmten Stelle in das Hochregallager 45, eingelagert. Das Regalbediengerät 43 wird beispielsweise von dem Leitrechner angesteuert.

Das Öffnen der Aufsatzseitenabdeckung 29 erfolgt entweder manuell oder automatisiert mittels der waggonaufsatzfesten oder der externen Aufsatzseitenabdeckungsöffnungseinrichtung. Der Öffnungsvorgang wird beispielsweise gestartet mittels des Leitrechners, z.B. über das Regalbediengerät 43, welches ein entsprechendes Signal an die Aufsatzseitenabdeckungsöffnungseinrichtung sendet.

Gemäß einer weiteren Variante (nicht dargestellt), ist anstelle des Hochregallagers 45 ein anderes Lager vorhanden. Das Lager, insbesondre das Hochregallager 45, kann z.B. auch als Zwischenlager dienen. Die Behälter 40 können auch auf dem Boden abgestellt werden.

Gemäß einer weiteren Variante (nicht dargestellt), ist anstelle des Hochregallagers 45 ein Transportmittel, z.B. ein Förderband, eine Rollenbahn, eine Rollenförderbahn oder ein Routenzug vorhanden. Die Behälter 40 werden dann auf dem jeweiligen Transportmittel automatisiert abgesetzt und von dem Transportmittel automatisiert zum Bestimmungsort abtransportiert, z.B. zu einem Hochregallager oder direkt zu einer Fertigungslinie.

Alternativ dazu werden die Waggonaufsätze 12 nicht direkt auf der Verladebahn 4, sondern auf wartenden, verfahrbaren Untersätzen 46 abgesetzt, welche auf der Verladebahn 4 bereit stehen. Insbesondere in diesem Fall kann die Güterumschlagvorrichtung 1 auch in einem Güterbahnhof angeordnet sein.

Die fahrbaren Untersätze 46 sind zumindest zweiachsig, vorzugsweise dreiachsig, ausgebildet, und weisen zumindest vier Räder 47 auf. Zudem weisen die Untersätze 46 eine Deichsel 48 oder ein anderes Kopplungsmittel zum Ankoppeln an ein Zugfahrzeug auf. Außerdem weisen die Untersätze 46 jeweils eine Auflagefläche 49 zur Aufnahme der Abschnittsaußenseite 32a eines der beiden stirnseitigen Bodenwandungsabschnitte 32 auf.

Des Weiteren weisen die Untersätze 46 oberseitig und zentral im Bereich der Auflageflächen 49 jeweils eine an sich bekannte Königszapfenarretierungseinrichtung 50 zur Aufnahme und Verriegelung der Königszapfen 21 des Waggonaufsatzes 12 auf, die vorzugsweise ebenfalls gemäß der DE 10 2009 015 775 A1 ausgebildet ist. Beim Absetzen der Waggonaufsätze 12 auf den Untersätzen 46 werden nun zum einen die Abschnittsaußenseiten 32a der beiden stirnseitigen Bodenwandungsabschnitte 32 jeweils auf der Auflagefläche 49 eines der beiden Untersätze 46 abgesetzt. Dabei werden zudem die Königszapfen 21 in die jeweilige Königszapfenarretierungseinrichtung 50 eingeführt und verriegelt.

Nun kann ein manuell, alternativ automatisiert, verfahrbares Zugfahrzeug angekoppelt werden und der Waggonaufsatz 12 mit der Ladung zum jeweiligen Bestimmungsort verfahren werden. Die Untersätze 46 können aber auch als selbstfahrende, unbemannte Zugfahrzeuge ohne Deichsel 48 ausgebildet sein (nicht dargestellt).

Als weitere Alternative ist es zudem auch möglich, den erfindungsgemäßen Waggonaufsatz 12 als mobiles Zwischenlager zu verwenden. Das heißt der Waggonaufsatz 12 wird auf der Verladebahn 4 abgesetzt und nach und nach entladen. Beispielsweise ist die Verladebahn 4 in diesem Fall so breit ausgebildet, dass der Waggonaufsatz 12 so weit entfernt von der Gleisanlage 2 ist, dass zwischen der Gleisanlage 2 und dem Waggonaufsatz 12 Platz für das Be- und Entladen eines weiteren Waggonaufsatzes 12 ist.

Das Beladen des Waggonaufsatzes 12 erfolgt in umgekehrter Weise wie das Entladen. Das heißt, der Waggonaufsatz 12 kann mittels des Regalbediengerätes 43 automatisiert beladen werden, wobei die Behälter 40 z.B. aus dem Hochregallager 45 oder dem Transportmittel entnommen werden.

Insbesondere der verfahrbare Waggonaufsatz 12 mit den Untersätzen 46 kann auch außerhalb der Güterumschlagvorrichtung 1 ent- und beladen werden. Dies kann auch manuell bzw. nicht automatisiert erfolgen, insbesondere durch die bekannte und weltweit angewandte Entladung per Gabelstapler.

Der beladene Waggonaufsatz 12 wird dann mittels der Shuttlebalken 5 von der Verladebahn 4 oder den Untersätzen 46 abgehoben und zu dem Waggonuntergestell 10 verfahren. Beim Abheben von den Untersätzen 46 werden die Königszapfen 21 automatisch entriegelt. Dort werden sie mittels der ortsfesten Hubeinrichtungen 13 von den Shuttlebalken 5 abgehoben und die Shuttlebalken werden wieder zurück zur Verladebahn 4 gefahren. Die Waggonseitenwände 9 werden mittels der Schwenk- und Entriegelungseinrichtungen 26 eingeklappt und mit den Waggonkopfstücken 16 verriegelt. Dann werden die Waggonaufsätze 12 mittels der ortsfesten Hubeinrichtungen 13 auf den Waggonseitenwänden 9 abgesetzt und in diese eingehängt. Dabei werden die Königszapfen 21 in die Königszapfenverriegelungseinrichtungen 20 eingeführt und verriegelt. Nun kann der Güterzug die Güterumschlagvorrichtung 1 wieder verlassen.

Im Rahmen der Erfindung liegt es dabei selbstverständlich auch, dass der Waggonaufsatz 12 eine oder mehrere vertikale, zur Waggonquerrichtung 12b senkrechte Zwischenwände aufweist (nicht dargestellt). In diesem Fall sind beide Aufsatzseitenabdeckungen 29 öffenbar. Vorzugsweise sind allerdings keine derartigen Zwischenwände vorhanden, so dass bei geöffneter Aufsatzseitenabdeckung 29 der Waggonaufsatz 12 in Aufsatzquerrichtung 12b vollständig zugänglich ist bzw. vom Regalbediengerät 43 durchgriffen werden kann.

Zudem können die einzelnen Abteile 39 bezüglich ihrer Abmessungen in Höhe/Breite/Länge unterschiedlich sein. Bevorzugt werden aber wie beschrieben die Abteilreihen ausgebildet, welche aus zueinander benachbarten Abteilen mit identischer Höhe bestehen.

Auch kann die Güterumschlagvorrichtung 1 weitere, insbesondere ortsfeste Hubeinrichtungen aufweisen, welche auf der Verladebahn 4 angeordnet sind. Mittels diesen Hubeinrichtungen ist der Waggonaufsatz 12 von den Shuttlebalken 5 abhebbar und nach dem Wegfahren der Shuttlebalken 5 auf der Verladebahn 4 oder den Untersätzen 46, welche unter die Waggonaufsätze 12 fahren, absenkbar. In diesem Fall weisen die Shuttlebalken 5 keine eigenen Balkenhubeinrichtungen 11 auf und können leichter ausgebildet sein. Zum Aufsetzen des Waggonaufsatzes 12 auf die Shuttlebalken 5 wird der Waggonaufsatz 12 zunächst angehoben, die Shuttlebalken 5 drunter gefahren, gegebenenfalls die Untersätze 46 weg gefahren und die Waggonuntersätze 12 auf den Shuttlebalken 5 abgesenkt.

Zudem können die Behälter 40 auch entnommen werden ohne dass die Waggonaufsätze 12 auf der Verladebahn 4 abgesetzt werden. Insbesondere dann, wenn ein Transportmittel für die Behälter 40 vorhanden ist, welches nach dem Entladen sofort neue Behälter 40 zum Aufladen auf die Waggonaufsätze 12 anliefert.

Weiterhin kann der Waggonaufsatz 12 auch direkt auf dem Güterwaggon 3 be- und entladen werden, etwa nur durch Wegklappen der Waggonseitenwände 9 und Heranfahren eines Regalbediengerätes 43 auf entsprechend verfahrbarem Untergestell oder durch manuelle Entladung mit Gabelstapler.

Der erfindungsgemäße Waggonaufsatz 12 ermöglicht ein automatisiertes, staplerfreies (also ohne Einsatz eines manuell betätigbaren Gabelstaplers), LKW-freies Handling der Behälter 40 entlang der inbound-Transportkette, also der Transportkette in einem Werk oder einer Fabrik, an das bzw. die die Behälter 40 angeliefert werden. Dies spart Zeit und Kosten und ermöglicht eine geschlossene Informationsübertragung. Dies ist insbesondere durch die Einteilung des Waggonaufsatzinnenraums 38 in die einzelnen Abteile 39 und durch die bevorzugte zusätzliche Informationsübertragung mittels des Datenträgers im Waggonaufsatz 12 möglich. Durch die Einteilung in Abteile 39 ist der Waggonaufsatzinnenraum 38 gerastert bzw. in Raster eingeteilt. Und dadurch können Referenzpunkte bzw. Koordinaten am Waggonaufsatz 12 definiert werden, an denen sich das Regalbediengerät 43 orientieren kann. Mittels der Referenzpunkte bzw. Koordinaten wird somit ganz genau abgespeichert und angegeben, wo sich welcher Behälter 40 mit welchem Inhalt befindet. Damit ist eine gezielte, automatisierte Entnahme der einzelnen Behälter 40 möglich.

Zudem erfolgt durch die Abteile 39 und insbesondere die vertikalen Zwischenwände 36 eine automatische Ladungssicherung. Denn dadurch, dass die Abmessungen der Behälter 40 auf die Abmessungen der Abteile 39 abgestimmt sind und diese in Aufsatzlängs- und -querrichtung 12a;b formschlüssig in den Abteilen 39 aufgenommen sind, ist keine zusätzliche Sicherung bzw. Arretierung der Behälter 40, z.B. durch Verzurren wie beim LKW, notwendig. Insbesondere auch dadurch ist die automatisierte Be- und Entladung des erfindungsgemäßen Waggonaufsatzes 12 möglich. Außerdem muss deshalb nicht die gesamte Ladung entnommen werden. Einzelne Abteile 39 können einzeln be- und entladen werden. Die restliche Ladung in den anderen Abteilen 39 ist weiterhin gesichert. Zur zusätzlichen Ladungssicherung können zudem sich in Aufsatzquerrichtung 12b erstreckende Schienen oder Stangen oder Aussparungen vorhanden sein, in denen die Behälterstellfüße 40a formschlüssig angeordnet sind.

Bei dem zu transportierenden Stückgut kann es sich zudem im Rahmen der Erfindung auch um palettierte Ware, also Ware auf Paletten, z.B. auch Lebensmittel (gegebenenfalls bei vorhandener Kühlung), oder um Gestelle, z.B. Motoren oder Fahrzeugsitze, handeln. Auch deren Form ist üblicherweise auf die Form der Abteile 39 abgestimmt, so dass keine zusätzliche Ladungssicherung notwendig ist.

Im Rahmen der Erfindung liegt es dabei auch, dass der Waggonaufsatz keine Königszapfen 21 oder lediglich nur einen Königszapfen 21 aufweist. Denn eine Verriegelung des Waggonaufsatzes 12 in horizontaler Richtung ist nicht zwingend notwendig. Denn aufgrund der hohen Gewichtskraft der Waggonaufsätze 12 verrutschen diese auf den Waggonseitenwänden 9 kaum. Es können allerdings in an sich bekannter Weise von der Wandoberkante 9c vertikal abstehende Anschlagelemente (nicht dargestellt) vorhanden sein, zwischen welchen die Auflageelemente 41 angeordnet sind. Die Anschlagelemente dienen u.a. dazu, die Bewegung des Waggonaufsatzes 12 relativ zum Waggonuntergestell 10 in Waggonlängsrichtung zu begrenzen und auch das Verwinden bei Kurvenfahrt zu begrenzen.

Die erfindungsgemäßen Zwischenwände 36 und Zwischenböden 37a;b versteifen zudem den Waggonaufsatz 12.

Im Rahmen der Erfindung liegt es dabei auch, dass die Zwischenwände 36 in Aufsatzlängsrichtung 12a verstellbar sind und in unterschiedlichen Positionen mit entsprechenden Fixierungsmitteln fixierbar sind und die Zwischenböden 37a;b;c in Aufsatzhöhenrichtung 12c verstellbar und in unterschiedlichen Positionen mit entsprechenden Fixierungsmitteln fixierbar sind. Dadurch können die Abmessungen der Abteile 39 variiert werden und an die Abmessungen des zu transportierenden Stückgutes angepasst werden.

Zudem halten die erfindungsgemäßen Güterwaggons 3 wie bereits erläutert nationale oder internationale Lademaße der Bahn-Infrastrukturbetreiber und/oder international genormte Fahrzeugeinschränkungslinien wie etwa das internationale Begrenzungslinie "G1" oder "G2" ein. Der besondere Vorteil dieser Eigenschaft liegt darin, dass der Schienentransport des Waggonaufsatzes 12 im erfindungsgemäßen Güterwaggon 3 dann nicht nach den Prozeduren und Regelwerken als "außergewöhnliche Sendung" bei den Infrastrukturbetreibern (wie etwa DB Netz AG in Deutschland oder der SBB Infrastruktur in der Schweiz) angemeldet werden muss, sondern als frei beweglicher Güterwaggon 3 in Güterzüge eingereiht werden kann. Dieses erspart Zeit und Kosten. Zudem sind dadurch viele europäische Streckenabschnitte befahrbar, die im Falle des alternativen Schienentransportes in Form von Beladung von 4m hohen Sattelaufliegern auf sogenannte Tragwagen des "Kombinierten Verkehrs" nicht mehr befahrbar sind. Denn Sattelauflieger auf Tragwagen ragen in den oberen äußeren Ecken aus den Lademaßen heraus, was die Problematik des kombinierten Schienenverkehrs in Europa schlechthin ist. Da die mittleren Bodenwandungsabschnitte 33 knapp oberhalb der Schienenoberkante angeordnet sind, ist es erfindungsgemäß möglich bei Einhaltung des internationalen Lademaßes "G1" auch hohe Ladeeinheiten mittels des erfindungsgemäßen Waggonaufsatzes 12 zu transportieren. Insbesondere wird somit ein Transport von genormten "Gitterboxen" mit jeweils einer Höhe von einem Meter in drei Ebenen möglich, ohne dass die Lademaß-Kurven der Schienennetz-Betreiber in Europa verletzt werden.

Ein weiterer Vorteil der Erfindung ist folgender:
Da die Behälter 40 zudem ohne Sattelauflieger mittels des Güterwaggons 3 transportiert werden, welcher ein hohes Gewicht aufweist, kann das Gesamtgewicht der Ladung höher sein als beim Transport mit Sattelauflieger bis die zulässige Achslast des Güterwaggons 3 erreicht ist. In einem Sattelauflieger können im Straßenverkehr typischerweise nur rund 26 Tonnen Ladung transportiert werden (26 t plus 7 t Sattelauflieger plus 7 t Zugmaschine = 40 t Begrenzung nach STVo). Im erfindungsgemäßen Waggonaufsatz 12 können dagegen bis zu 60 to (4 Achsen a 22,5 to = 90 to minus rund 20 t Eigengewicht Waggon minus 10 t Eigengewicht Waggonaufsatz) transportiert werden.

Mittels des erfindungsgemäßen Waggonaufsatzes 12 ist somit der kombinierte Schienenverkehr bzw. Güterverkehr von losem Stückgut deutlich schneller und kostengünstiger sowie effektiver möglich.

Dabei liegt es auch im Rahmen der Erfindung, dass es sich bei Waggonuntersatz um einen Taschenwagen oder anderen Wagen handelt, auf den der Waggonaufsatz 12 derart aufgesetzt ist, dass er mittels eines Krans abgehoben werden kann. Der Kran dient dann sowohl als Hubeinrichtung zum Abheben und Absenken des Waggonaufsatzes 12 von bzw. auf dem Waggonuntergestell 10 als auch als Quertransportmittel zum Transportieren des abgehobenen Waggonaufsatzes 12 zur Verladebahn 4 und von der Verladebahn 4 zum Waggonuntergestell 10.

Auch muss der erfindungsgemäße Waggonaufsatz 12 nicht auf die Waggonseitenwände 9 aufgesetzt sein, sondern kann z.B. auch direkt auf die beiden Waggonkopfstücke 16 aufgesetzt sein.

Zudem kann eine Güterumschlagvorrichtung 1 auch lediglich einen Güterwaggon 3 und eine Quertransporteinrichtung aufweisen oder lediglich eine Quertransporteinrichtung und die Güterwaggons 3 werden nacheinander entladen.

## Patentansprüche

1. Güterwaggon (3) für einen Güterzug mit einem Waggonuntergestell (10) und einem darauf angeordneten Waggonaufsatz (12), wobei
- das Waggonuntergestell (10) einen Waggonrahmen (14) und zwei Drehgestelle (15) oder zwei Einzelachsen aufweist,
- der Waggonrahmen (14) zwei Waggonkopfstücke (16) und zwei sich parallel zu einer Waggonlängsrichtung (3a) erstreckende Waggonseitenwände (9) aufweist, welche mit den beiden Waggonkopfstücken (16) verbunden sind,
- die beiden Waggonseitenwände (9) jeweils um eine zur Waggonlängsrichtung (3a) parallele Seitenwandschwenkachse (22) nach außen ausklappbar sind und mit jedem der beiden Waggonkopfstücke (16) mittels einer Verriegelungseinrichtung in ihrer eingeklappten Stellung lösbar verriegelt sind,
- der Waggonaufsatz (12) eine horizontale Aufsatzlängsrichtung (12a), Auflageelemente (41) zur direkten Auflage auf das Waggonuntergestell (10), vorzugsweise auf den Waggonseitenwänden (9), und vorzugsweise Mittel zur horizontalen Verriegelung des Waggonaufsatzes (12) mit dem Waggonuntergestell (10) aufweist, wobei der Waggonaufsatz (12) mit seinen Auflageelementen (41) auf dem Waggonuntergestell (10), vorzugsweise den Waggonseitenwänden (9), von diesem abhebbar angeordnet bzw. gelagert ist,
- der Waggonaufsatz (12) als gedeckter Waggonaufsatz (12) ausgebildet ist und eine Aufsatzbodenwandung (28), zwei Aufsatzseitenabdeckungen (29), zwei Aufsatzstirnwandungen (30) und ein Aufsatzdach (31) aufweist, wobei die Aufsatzbodenwand (28), die Aufsatzseitenabdeckungen (29), die Aufsatzstirnwandungen (30) und das Aufsatzdach (31) einen Waggoninnenraum (38) begrenzen, und
- der Waggonaufsatz (12) zumindest eine vertikale, zur Waggonlängsrichtung (12a) senkrechte, Zwischenwand (36) und zumindest einen horizontalen Zwischenboden (37a;37b;37c) aufweist, welche den Waggoninnenraum (38) in mehrere, bevorzugt quaderförmige, Abteile (39) aufteilen

2. Güterwaggon (3) nach Anspruch 1,
**dadurch gekennzeichnet, dass**
der Waggonaufsatz (12) eine zur Aufsatzlängsrichtung (12a) senkrechte, horizontale Aufsatzquerrichtung (12b) und eine zur Aufsatzlängsrichtung (12a) senkrechte, vertikale Aufsatzhöhenrichtung (12c) aufweist, und der Waggonaufsatz (12) in Aufsatzlängsrichtung (12a) gesehen ein erstes Aufsatzstirnende (27a) und ein zweites Aufsatzstirnende (27b) aufweist.

3. Güterwaggon (3) nach Anspruch 1 oder 2,
**dadurch gekennzeichnet, dass**
zumindest eine der Aufsatzseitenabdeckungen (29) öffenbar ist, wobei der Waggonaufsatz (12) vorzugsweise eine Aufsatzseitenabdeckungsöffnungseinrichtung aufweist, mit der die Aufsatzseitenwandung (29) öffenbar und schließbar in Verbindung steht.

4. Güterwaggon (3) nach einem der vorhergehenden Ansprüche,
**dadurch gekennzeichnet, dass**
die Aufsatzbodenwandung (28) gestuft ausgebildet ist und zwei horizontale, stirnendseitige Bodenwandabschnitte (32), einen mittigen, horizontalen Bodenwandabschnitt (33) und zwei, insbesondere vertikale, Bodenwandabschnitte (34) aufweist, welche jeweils einen der beiden stirnendseitigen Bodenwandabschnitte (32) mit dem mittigen Bodenwandabschnitt (33) verbinden,
wobei der mittige Bodenwandabschnitt (33) in Aufsatzlängsrichtung (12a) gesehen zwischen den beiden stirnendseitigen Bodenwandabschnitten (32) angeordnet ist, und
wobei der mittige Bodenwandungsabschnitt (33) in Aufsatzhöhenrichtung (12c) gesehen tiefer angeordnet als die beiden stirnseitigen Bodenwandungsabschnitte (32).

5. Güterwaggon (3) nach einem der vorhergehenden Ansprüche,
**dadurch gekennzeichnet, dass**
der Waggonaufsatz (12) mehrere vertikale, zur Waggonlängsrichtung (12a) senkrechte Zwischenwände (36) und mehrere Zwischenböden (37a;37b) aufweist,
wobei der Waggonaufsatz (12) vorzugsweise
- einen ersten Zwischenboden (37a), welcher auf gleicher Höhe wie die beiden stirnseitigen Bodenwandungsabschnitte (32) angeordnet ist und sich an diese anschließt, und
- einen zweiten Zwischenboden (37b), welcher oberhalb des ersten horizontalen Zwischenbodens (37b) angeordnet ist und sich von der einen zur anderen Aufsatzstirnwandung (30) erstreckt,
- vorzugsweise einen dritten Zwischenboden (37c), welcher oberhalb des zweiten Zwischenbodens (37b) und an einem oberen Ende der Aufsatzstirnwandungen (30) angeordnet ist und sich von der einen zur anderen Aufsatzstirnwandung (30) erstreckt,
aufweist.

6. Güterwaggon (3) nach einem der vorhergehenden Ansprüche,
**dadurch gekennzeichnet, dass**
der Waggonaufsatz (12) in Aufsatzhöhenrichtung (12c) gesehen mehrere übereinander angeordnete, horizontale Abteilreihen (51a;51b;51c) aufweist, wobei eine Abteilreihe (51a;51b;51c) jeweils weist mehrere in Aufsatzlängsrichtung (12a) zueinander benachbarte, gleich hohe, Abteile (39) aufweist,
wobei vorzugsweise der Waggonaufsatz (12) drei übereinander angeordnete, horizontale Abteilreihen (51a;51b;51c), nämlich eine untere Abteilreihe (51a), eine mittlere Abteilreihe (51b) und eine obere Abteilreihe (51c) aufweist,
wobei vorzugsweise
- die untere Abteilreihe (51a) unten von dem mittigen Bodenwandungsabschnitt (33), oben von dem ersten Zwischenboden (37a) sowie stirnseitig von den beiden vertikalen Bodenwandungsabschnitten (34) begrenzt wird,
- die mittlere Abteilreihe (51b) unten von dem ersten Zwischenboden (37a), oben von dem zweiten Zwischenboden (37b) sowie stirnseitig von den beiden vertikalen Aufsatzstirnwänden (30) begrenzt wird, und
- die obere Abteilreihe (51c) unten von dem zweiten Zwischenboden (37b), oben dritten Zwischenboden (37c) oder von dem Aufsatzdach (31) sowie stirnseitig von den beiden vertikalen Aufsatzstirnwänden (30) begrenzt wird.

7. Güterwaggon (3) nach Anspruch 6,
**dadurch gekennzeichnet, dass**
die mittlere und die obere Abteilreihe (51b;c) in Waggonlängsrichtung (12a) gesehen an beiden Aufsatzstirnenden (27a;b) über die untere Abteilreihe (51a) hinaus kragen.

8. Güterwaggon (3) nach einem der vorhergehenden Ansprüche,
**dadurch gekennzeichnet, dass**
der Waggonaufsatz (12) einen Datenträger, insbesondere einen RFID-Chip oder Barcode oder "QR-Codes", aufweist, auf dem Informationen bezüglich der Art der Ladung des Waggonaufsatzes (12) und des Ortes der Ladung im Waggonaufsatz (12) enthalten sind.

9. Güterwaggon (3) nach einem der vorhergehenden Ansprüche,
**dadurch gekennzeichnet, dass**
der Waggonaufsatz (12) in die Waggonseitenwände (9) eingehängt ist.

10. Güterwaggon (3) nach einem der vorhergehenden Ansprüche,
**dadurch gekennzeichnet, dass**
der Waggonaufsatz (12) mit dem Waggonuntergestell (10) in horizontaler und bevorzugt auch in vertikaler Richtung lösbar verriegelt ist.

11. Güterwaggon (3) nach einem der vorhergehenden Ansprüche,
**dadurch gekennzeichnet, dass**
die beiden Waggonseitenwände (9) jeweils eine Wandinnenseite (9a), eine dieser in eine Waggonquerrichtung (3b) gegenüberliegende Wandaußenseite (9b), eine Wandoberkante (9c) und eine Wandunterkante (9d) aufweisen.

12. Güterwaggon (3) nach einem der Ansprüche 4 bis 11,
**dadurch gekennzeichnet, dass**
die beiden stirnseitigen Bodenwandungsabschnitte (32) über den beiden Waggonkopfstücken (16) angeordnet sind und der mittlere Bodenwandungsabschnitt (33) und die beiden vertikalen Bodenwandungsabschnitte (34) in Waggonlängsrichtung (12a) gesehen zwischen den beiden Waggonkopfstücken (16) angeordnet sind,
wobei vorzugsweise der mittlere Bodenwandungsabschnitt (33) 15 bis 50 cm, bevorzugt 18 bis 24 cm oberhalb einer Schienenoberkante der Gleisanlage (2) angeordnet ist, auf der der Güterwaggon (3) in Waggonlängsrichtung (3a) hin- und her verfahrbar angeordnet ist.

13. Güterwaggon (3) nach einem der Ansprüche 6 bis 12,
**dadurch gekennzeichnet, dass**
die untere Abteilreihe (51b) in Waggonlängsrichtung (12a) gesehen zwischen den beiden Waggonkopfstücken (16) angeordnet ist.

14. Güterumschlagvorrichtung (1) zum Be- und Entladen von Güterzügen mit losem Stückgut, insbesondere Containergut, insbesondere zum Umschlagen des losen Stückgutes, insbesondere des Containergutes, von der Straße, von Fabriken oder Herstellwerken zur Schiene und umgekehrt, mittels horizontaler Querverladung mittels von jeweils einem Waggonuntergestell (10) eines Güterwaggons (3) abnehmbaren, die Stückgüter aufnehmenden Waggonaufsätzen (12), aufweisend:
a) eine Gleisanlage (2) mit zwei Gleissträngen (2a;2b),
b) eine neben dem Gleis (2) und parallel zu dieser angeordnete Verladebahn (4),
c) Hubeinrichtungen (13), vorzugsweise ortsfest, zum Anheben und Absenken der Waggonaufsätze (12) von bzw. auf dem jeweiligen Waggonuntergestell (10),
d) Zumindest eine Quertransporteinrichtung für den Quertransport der Waggonaufsätze (12) von einem Güterwaggon (3) auf die Verladebahn (4) und umgekehrt mit jeweils zumindest einem, bevorzugt quer zur Gleisanlage (2) verfahrbaren, Quertransportmittel (5),
**dadurch gekennzeichnet, dass**
die Güterumschlagvorrichtung (1) zumindest einen, vorzugsweise mehrere, Güterwaggons (3) gemäß einem der vorhergehenden Ansprüche aufweist.

15. Güterumschlagvorrichtung (1) nach Anspruch 14,
**dadurch gekennzeichnet, dass**
die Güterumschlagvorrichtung (1) pro Verriegelungseinrichtung eine Schwenk- und Entriegelungseinrichtung (26) zum Lösen der Verriegelung der Waggonseitenwände (9) und zum Auf- und Einklappen der Waggonseitenwände (9) aufweist.

16. Güterumschlagvorrichtung (1) nach Anspruch 14 oder 15,
**dadurch gekennzeichnet, dass**
die Güterumschlagvorrichtung (1) ein automatisiertes Be- und Entladegerät (42) zum Be- und Entladen des Güterwaggons (3) aufweist, wobei das Be- und Entladegerät (42) bevorzugt ein Regalbediengerät (43) ist, welches auf der der Gleisanlage (2) abgewandten Seite der Verladebahn (4) angeordnet ist und in Aufsatzlängsrichtung (12a) neben der Verladebahn hin- und her verfahrbar ist, wobei vorzugsweise auf der der Verladebahn (4) abgewandten Seite des Regalbediengerätes (43) ein Hochregallager (45) angeordnet ist.

17. Güterumschlagvorrichtung (1) nach Anspruch 14 oder 15,
**dadurch gekennzeichnet, dass**
die Güterumschlagvorrichtung (1) ein Transportmittel für die Behälter (40), insbesondere einen Routenzug oder Förderband oder eine Rollenbahn oder eine Rollenförderbahn aufweist, welches auf der der Gleisanlage (2) abgewandten Seite der Verladebahn (4) angeordnet ist.

18. Güterumschlagvorrichtung (1) nach einem der Ansprüche 14 bis 17,
**dadurch gekennzeichnet, dass**
die Güterumschlagvorrichtung (1) Steuermittel, vorzugsweise einen Leitrechner, zur Steuerung des Be- und Entladens, insbesondere des Be- und Entladegerätes (42), aufweist, das mit dem Be- und Entladegerät (42) in Signal übertragender Verbindung steht.

19. Verfahren zur Entladung eines Güterzuges mit Güterwaggons (3) gemäß einem der Ansprüche 1 bis 13, insbesondere unter Verwendung einer Güterumschlagvorrichtung (1) gemäß einem der Ansprüche 14 bis 18, mit folgenden Verfahrensschritten:
a) Abheben der Waggonaufsätze (12) von den Waggonuntergestellen (10),
b) Transportieren der abgehobenen Waggonaufsätze (12) zur Verladebahn (4) und Absetzten auf der Verladebahn (4) oder den Untersätzen (46),
c) Automatisiertes Entladen der Waggonaufsätze (12), insbesondere automatisiertes Entnehmen der Behälter (40) aus den Abteilen (39), mittels eines automatisierten Be- und Entladegerätes (42), insbesondere eines Regalbediengerätes (43).

20. Verfahren nach Anspruch 19 mit folgenden Verfahrensschritten:
a) Abheben der Waggonaufsätze (12) von den Waggonuntergestellen (10),
b) Entriegeln und Abklappen der Waggonseitenwände (9) nach außen,
c) Verfahren von zumindest jeweils zwei Quertransporteinrichtungen, insbesondere der Shuttlebalken (5), unter jeweils einen Waggonaufsatz (12),
d) Absetzen der Waggonaufsätze (12) auf den Quertransporteinrichtungen, insbesondere den Shuttlebalken (5),
e) Verfahren der Quertransporteinrichtungen, insbesondere der Shuttlebalken (5) auf die Verladebahn (4),
f) Vorzugsweise Absetzen der Waggonaufsätze (12) auf einer Unterlage, insbesondere der Verladebahn (4) oder den Untersätzen (46),
g) Automatisiertes Entladen der Waggonaufsätze (12), insbesondere automatisiertes Entnehmen der Behälter (40) aus den Abteilen (39), mittels eines automatisierten Be- und Entladegerätes (42), insbesondere eines Regalbediengerätes (43), wobei vorzugsweise das Be- und Entladegerät (42) mittels eines Steuermittels, bevorzugt des Leitrechners gesteuert wird.

## Claims

1. Freight car (3) for a freight train having a railcar undercarriage (10) and a railcar pallet (12) arranged on said railcar undercarriage, wherein
- the railcar undercarriage (10) has a railcar frame (14) and two bogies (15) or two individual axles,
- the railcar frame (14) has two railcar headpieces (16) and two railcar side walls (9) which extend parallel to a car longitudinal direction (3a) and which are connected to the two railcar headpieces (16),
- the two railcar side walls (9) can each be folded out about a side wall pivot axis (22) parallel to the car longitudinal direction (3a) and are releasably locked to each of the two railcar headpieces (16) by means of a locking device in their folded-in position,
- the railcar pallet (12) has a horizontal superstructure longitudinal direction (12a), bearing elements (41) for directly bearing on the railcar undercarriage (10), preferably on the railcar side walls (9), and preferably means for horizontally locking the railcar pallet (12) to the railcar undercarriage (10), wherein the railcar pallet (12) is arranged or borne with its bearing element (41) on the railcar undercarriage (10), preferably the railcar side walls (9), so as to be liftable therefrom,
- the railcar pallet (12) is in the form of a covered railcar pallet (12) and has a superstructure base wall (28), two superstructure side covers (29), two superstructure face walls (30) and a superstructure roof (31), wherein the superstructure base wall (28), the superstructure side covers (29), the superstructure face walls (30) and the superstructure roof (31) delimit a car interior space (38), and
- the railcar pallet (12) has at least one vertical intermediate wall (36), which is perpendicular to the car longitudinal direction (12a), and at least one horizontal intermediate base (37a; 37b; 37c), which divide the car interior space (38) into multiple, preferably cuboidal, compartments (39).

2. Freight car (3) according to Claim 1,
**characterized in that**
the railcar pallet (12) has a horizontal superstructure transverse direction (12b) which is perpendicular to the superstructure longitudinal direction (12a), and a vertical superstructure height direction (12c) which is perpendicular to the superstructure longitudinal direction (12a), and the railcar pallet (12) has a first superstructure face end (27a) and a second superstructure face end (27b) as viewed in the superstructure longitudinal direction (12a).

3. Freight car (3) according to Claim 1 or 2,
**characterized in that**
at least one of the superstructure side covers (29) is openable, wherein the railcar pallet (12) preferably has a superstructure side cover opening device to which the superstructure side wall (29) is connected in openable and closable fashion.

4. Freight car (3) according to any of the preceding claims,
**characterized in that**
the superstructure base wall (28) is of stepped form and has two horizontal, face-end-side base wall portions (32), a central, horizontal base wall portion (33), and two, in particular vertical, base wall portions (34) which connect in each case one of the two face-end-side base wall portions (32) to the central base wall portion (33),
wherein the central base wall portion (33) is arranged between the two face-end-side base wall portions (32) as viewed in the superstructure longitudinal direction (12a), and
wherein the central base wall portion (33) is arranged lower, as viewed in the superstructure vertical direction (12c), than the two face-side base wall portions (32).

5. Freight car (3) according to any of the preceding claims,
**characterized in that**
the railcar pallet (12) has multiple vertical intermediate walls (36), which are perpendicular to the car longitudinal direction (12a), and multiple intermediate bases (37a; 37b),
wherein the railcar pallet (12) preferably has
- a first intermediate base (37a) which is arranged at the same height as, and adjoins, the two face-side base wall portions (32), and
- a second intermediate base (37b) which is arranged above the first horizontal intermediate base (37b) and which extends from one to the other superstructure face wall (30),
- preferably a third intermediate base (37c) which is arranged above the second intermediate base (37b) and at an upper end of the superstructure face walls (30) and which extends from one to the other superstructure face wall (30).

6. Freight car (3) according to any of the preceding claims,
**characterized in that**
the railcar pallet (12) has multiple horizontal compartment rows (51a; 51b; 51c) arranged one above the other as viewed in the superstructure height direction (12c), wherein a compartment row (51a; 51b; 51c) in each case has multiple compartments (39) of equal height which are adjacent to one another in the superstructure longitudinal direction (12a),
wherein the railcar pallet (12) preferably has three horizontal compartment rows (51a; 51b; 51c) arranged one above the other, namely a lower compartment row (51a), a middle compartment row (51b) and an upper compartment row (51c),
wherein, preferably,
- the lower compartment row (51a) is delimited at the bottom by the central base wall portion (33), at the top by the first intermediate base (37a) and at the face sides by the two vertical base wall portions (34),
- the middle compartment row (51b) is delimited at the bottom by the first intermediate base (37a), at the top by the second intermediate base (37b) and at the face sides by the two vertical superstructure face walls (30), and
- the upper compartment row (51c) is delimited at the bottom by the second intermediate base (37b) at the top third intermediate base (37c) or by the superstructure roof (31), and at the face sides by the two vertical superstructure face walls (30).

7. Freight car (3) according to Claim 6,
**characterized in that**
the middle and the upper compartment row (51b; c) project beyond the lower compartment row (51a) as viewed in the car longitudinal direction (12a) at the two superstructure face ends (27a; b).

8. Freight car (3) according to any of the preceding claims,
**characterized in that**
the railcar pallet (12) has a data carrier, in particular an RFID chip or barcode or "QR code", on which there are stored information items relating to the nature of the load of the railcar pallet (12) and to the location of the load in the railcar pallet (12).

9. Freight car (3) according to any of the preceding claims,
**characterized in that**
the railcar pallet (12) is hinged into the railcar side walls (9).

10. Freight car (3) according to any of the preceding claims,
**characterized in that**
the railcar pallet (12) is releasably locked to the railcar undercarriage (10) in a horizontal direction and preferably also in a vertical direction.

11. Freight car (3) according to any of the preceding claims,
**characterized in that**
the two railcar side walls (9) each have a wall inner side (9a), a wall outer side (9b) situated opposite said wall inner side in a car transverse direction (3b), a wall upper edge (9c) and a wall lower edge (9d).

12. Freight car (3) according to any of Claims 4 to 11,
**characterized in that**
the two face-side base wall portions (32) are arranged above the two railcar headpieces (16), and the central base wall portion (33) and the two vertical base wall portions (34) are arranged between the two railcar headpieces (16) as viewed in the car longitudinal direction (12a), wherein, preferably, the central base wall portion (33) is arranged 15 to 50 cm, preferably 18 to 24 cm, above a rail upper edge of the railway line (2) on which the freight car (3) is arranged so as to be movable backwards and forwards in the car longitudinal direction (3a).

13. Freight car (3) according to any of Claims 6 to 12,
**characterized in that**
the lower compartment row (51b) is arranged between the two railcar headpieces (16) as viewed in the car longitudinal direction (12a).

14. Freight transfer device (1) for the loading and unloading of freight trains with loose bulk material, in particular container material, in particular for the transfer of the loose bulk material, in particular of the container material, from the road, from factories or manufacturing plants to the railway and vice versa, by means of horizontal transverse loading by means of railcar pallets (12) which are removable from in each case one railcar undercarriage (10) of a freight car (3) and which hold the bulk material, having:
a) a railway line (2) with two rails (2a; 2b),
b) a loading track (4) arranged adjacent and parallel to the railway (2),
c) lifting devices (13), which are preferably static, for lifting and lowering the railcar pallets (12) from and onto the respective railcar undercarriage (10),
d) at least one transverse transport device for the transverse transport of the railcar pallets (12) from a freight car (3) onto the loading track (4) and vice versa, with in each case at least one transverse transport means (5) which is movable preferably transversely with respect to the railway line (2),
**characterized in that**
the freight transfer device (1) has at least one, preferably multiple, freight cars (3) according to any of the preceding claims.

15. Freight transfer device (1) according to Claim 14,
**characterized in that**
the freight transfer device (1) has, for each locking device, a pivoting and unlocking device (26) for releasing the locking of the railcar side walls (9) and for the folding-open and folding-in of the railcar side walls (9).

16. Freight transfer device (1) according to Claim 14 or 15,
**characterized in that**
the freight transfer device (1) has an automated loading and unloading machine (42) for the loading and unloading of the freight car (3), wherein the loading and unloading machine (42) is preferably a storage and retrieval machine (43) which is arranged on that side of the loading track (4) which is averted from the railway line (2) and which is movable back and forth in the superstructure longitudinal direction (12a) adjacent to the loading track, wherein, preferably, a high-bay storage facility (45) is arranged on that side of the storage and retrieval machine (43) which is averted from the loading track (4).

17. Freight transfer device (1) according to Claim 14 or 15,
**characterized in that**
the freight transfer device (1) has a transport means for the containers (40), in particular a tugger train or conveyor belt or a roller track or a roller conveyor, which is arranged on that side of the loading track (4) which is averted from the railway line (2).

18. Freight transfer device (1) according to any of Claims 14 to 17,
**characterized in that**
the freight transfer device (1) has control means, preferably a master computer, for controlling the loading and unloading process, in particular the loading and unloading machine (42), which control means is connected to the loading and unloading machine (42) in signal-transmitting fashion.

19. Method for unloading a freight train with freight cars (3) according to any of Claims 1 to 13, in particular using a freight transfer device (1) according to any of Claims 14 to 18, having the following method steps:
a) lifting the railcar pallets (12) from the railcar undercarriage (10),
b) transporting the lifted railcar pallets (12) to the loading track (4) and setting them down on the loading track (4) or the stands (46),
c) automatically unloading the railcar pallets (12), in particular automatically removing the containers (40) from the compartments (39), by means of an automated loading and unloading machine (42), in particular a storage and retrieval machine (43).

20. Method according to Claim 19, having the following method steps:
a) lifting the railcar pallets (12) from the railcar undercarriage (10),
b) unlocking and outwardly folding down the railcar side walls (9),
c) moving at least in each case two transverse transport devices, in particular the shuttle beams (5), under in each case one railcar pallet (12),
d) setting down the railcar pallets (12) on the transverse transport devices, in particular the shuttle beams (5),
e) moving the transverse transport devices, in particular the shuttle beams (5), onto the loading track (4),
f) preferably setting down the railcar pallets (12) on an underlying surface, in particular the loading track (4) or the stands (46),
g) automatically unloading the railcar pallets (12), in particular automatically removing the containers (40) from the compartments (39), by means of an automated loading and unloading machine (42), in particular a storage and retrieval machine (43), wherein, preferably, the loading and unloading machine (42) is controlled by a control means, preferably the master computer.

## Revendications

1. Wagon de marchandises (3) pour un train de marchandises avec un châssis de wagon (10) et une superstructure de wagon (12) disposée sur celui-ci, dans lequel
- le châssis de wagon (10) présente un cadre de wagon (14) et deux bogies (15) ou deux essieux individuels,
- le cadre de wagon (14) présente deux pièces de tête de wagon (16) et deux parois latérales de wagon (9) s'étendant de manière parallèle par rapport à un sens longitudinal de wagon (3a), lesquelles sont reliées aux deux pièces de tête de wagon (16),
- les deux parois latérales de wagon (9) peuvent être escamotées vers l'extérieur respectivement autour d'un axe de pivotement de paroi latérale (22) parallèle par rapport au sens longitudinal de wagon (3a) et sont verrouillées de manière amovible dans leur position rabattue avec chacune des deux pièces de tête de wagon (16) au moyen d'un dispositif de verrouillage,
- la superstructure de wagon (12) présente un sens longitudinal de superstructure horizontal (12a), des éléments à poser (41) destinés à être posés directement sur le châssis de wagon (10), de préférence sur les parois latérales de wagon (9), et de préférence des moyens servant au verrouillage horizontal de la superstructure de wagon (12) avec le châssis de wagon (10), dans lequel la superstructure de wagon (12) est disposée ou montée par ses éléments à poser (41) sur le châssis de wagon (10), de préférence les parois latérales de wagon (9), de manière à être relevée de celui-ci,
- la superstructure de wagon (12) est réalisée en tant que superstructure de wagon (12) couverte et présente une paroi de fond de superstructure (28), deux recouvrements latéraux de superstructure (29), deux parois frontales de superstructure (30) et un toit de superstructure (31), dans lequel la paroi de fond de superstructure (28), les recouvrements latéraux de superstructure (29), les parois frontales de superstructure (30) et le toit de superstructure (31) délimitent un espace intérieur de wagon (38), et
- la superstructure de wagon (12) présente au moins une paroi intermédiaire (36) verticale, perpendiculaire par rapport au sens longitudinal de wagon (12a), et au moins un fond intermédiaire (37a; 37b; 37c) horizontal, lesquels divisent l'espace intérieur de wagon (38) en plusieurs compartiments (39) de manière préférée de forme parallélépipédique.

2. Wagon de marchandises (3) selon la revendication 1,
**caractérisé en ce que**
la superstructure de wagon (12) présente un sens transversal de superstructure (12b) horizontal perpendiculaire par rapport au sens longitudinal de superstructure (12a) et un sens en hauteur de superstructure (12c) vertical perpendiculaire par rapport au sens longitudinal de superstructure (12a), et la superstructure de wagon (12) présente, dans une vue dans le sens longitudinal de superstructure (12a), une première extrémité frontale de superstructure (27a) et une seconde extrémité frontale de superstructure (27b).

3. Wagon de marchandises (3) selon la revendication 1 ou 2,
**caractérisé en ce que**
au moins un des recouvrements latéraux de superstructure (29) peut être ouvert, dans lequel la superstructure de wagon (12) présente de préférence un dispositif d'ouverture de recouvrement latéral de superstructure, auquel la paroi latérale de superstructure (29) est reliée de manière à pouvoir être ouverte et fermée.

4. Wagon de marchandises (3) selon l'une quelconque des revendications précédentes,
**caractérisé en ce que**
la paroi de fond d'infrastructure (28) est réalisée de manière étagée et présente deux sections de paroi de fond horizontales côté extrémité frontale (32), une section de paroi de fond centrale (33) horizontale et deux sections de paroi de fond (34), en particulier verticales, lesquelles relient respectivement une des deux sections de paroi de fond côté extrémité frontale (32) à la section de paroi de fond centrale (33),
dans lequel la section de paroi de fond centrale (33) est disposée, dans une vue dans le sens longitudinal de superstructure (12a), entre les deux sections de paroi de fond côté extrémité frontale (32), et
dans lequel la section de paroi de fond centrale (33) est disposée, dans une vue dans le sens en hauteur de superstructure (12c), de manière plus profonde que les deux sections de paroi de fond côté frontal (32).

5. Wagon de marchandises (3) selon l'une quelconque des revendications précédentes,
**caractérisé en ce que**
la superstructure de wagon (12) présente plusieurs parois intermédiaires (36) verticales, perpendiculaires par rapport au sens longitudinal de wagon (12a) et plusieurs fonds intermédiaires (37a ; 37b),
dans lequel la superstructure de wagon (12) présente de préférence
- un premier fond intermédiaire (37a), lequel est disposé à la même hauteur que les deux sections de paroi de fond côté frontal (32) et se raccorde à celles-ci, et
- un deuxième fond intermédiaire (37b), lequel est disposé au-dessus du premier fond intermédiaire horizontal (37b) et s'étend depuis l'une vers l'autre paroi frontale de superstructure (30),
- de préférence un troisième fond intermédiaire (37c), lequel est disposé au-dessus du deuxième fond intermédiaire (37b) et à une extrémité supérieure des parois frontales de superstructure (30) et s'étend depuis l'une vers l'autre paroi frontale de superstructure (30).

6. Wagon de marchandises (3) selon l'une quelconque des revendications précédentes,
**caractérisé en ce que**
la superstructure de wagon (12) présente, dans une vue dans le sens en hauteur de superstructure (12c), plusieurs rangées de compartiments (51a ; 51b ; 51c) horizontales disposées les unes au-dessus des autres, dans lequel une rangée de compartiments (51a ; 51b ; 51c) présente respectivement plusieurs compartiments (39) de même hauteur adjacents les uns par rapport aux autres dans le sens longitudinal de superstructure (12a),
dans lequel de préférence la superstructure de compartiment (12) présente trois rangées de compartiments (51a ; 51b ; 51c) horizontales disposées les unes au-dessus des autres, à savoir une rangée de compartiments inférieure (51a), une rangée de compartiments centrale (51b) et une rangée de compartiments supérieure (51c),
dans lequel de préférence
- la rangée de compartiments inférieure (51a) est délimitée en bas par la section de paroi de fond centrale (33), en haut par le premier fond intermédiaire (37a) et côté frontal par les deux sections de paroi de fond verticales (34),
- la rangée de compartiments centrale (51b) est délimitée en bas par le premier fond intermédiaire (37a), en haut par le deuxième fond intermédiaire (37b) ainsi que côté frontal par les deux parois frontales de superstructure verticales (30), et
- la rangée de compartiments supérieure (51c) est délimitée en bas par le deuxième fond intermédiaire (37b), en haut par le troisième fond intermédiaire (37c) ou par le toit de superstructure (31) ainsi que côté frontal par les deux parois frontales de superstructure verticales (30).

7. Wagon de marchandises (3) selon la revendication 6,
**caractérisé en ce que**
les rangées de compartiments centrale et supérieure (51b ; c) débordent, dans une vue dans le sens longitudinal de wagon (12a), aux deux extrémités frontales de superstructure (27a ; b) de la rangée de compartiments inférieure (51a).

8. Wagon de marchandises (3) selon l'une quelconque des revendications précédentes,
**caractérisé en ce que**
la superstructure de wagon (12) présente un support de données, en particulier une puce RFID ou un code à barres ou des « codes QR », sur lequel sont contenues des informations concernant le type du chargement de la superstructure de wagon (12) et l'emplacement du chargement dans la superstructure de wagon (12).

9. Wagon de marchandises (3) selon l'une quelconque des revendications précédentes,
**caractérisé en ce que**
la superstructure de wagon (12) est accrochée dans les parois latérales de wagon (9).

10. Wagon de marchandises (3) selon l'une quelconque des revendications précédentes,
**caractérisé en ce que**
la superstructure de wagon (12) est verrouillée avec le châssis de wagon (10) dans une direction horizontale et de manière préférée également dans une direction verticale.

11. Wagon de marchandises (3) selon l'une quelconque des revendications précédentes,
**caractérisé en ce que**
les deux parois latérales de wagon (9) présentent respectivement un côté intérieur de paroi (9a), un côté extérieur de paroi (9b) faisant face à celui-ci dans le sens transversal de wagon (3b), une arête supérieure de paroi (9c) et une arête inférieure de paroi (9d).

12. Wagon de marchandises (3) selon l'une quelconque des revendications 4 à 11,
**caractérisé en ce que**
les deux sections de paroi de fond (32) côté frontal sont disposées au-dessus des deux pièces de tête de wagon (16) et la section de paroi de fond centrale (33) et les deux sections de paroi de fond verticales (34) sont disposées, dans une vue dans le sens longitudinal de wagon (12a), entre les deux pièces de tête de wagon (16),
dans lequel de préférence la section de paroi de fond centrale (33) est disposée 15 à 50 cm, de manière préférée 18 à 24 cm, au-dessus de l'arête supérieure de rail de la voie ferrée (2), sur laquelle le wagon de marchandises (3) est disposé de manière à effectuer des déplacements en va-et-vient dans le sens longitudinal de wagon (3a).

13. Wagon de marchandises (3) selon l'une quelconque des revendications 6 à 12,
**caractérisé en ce que**
la rangée de compartiments inférieure (51b) est disposée, dans une vue dans le sens longitudinal de wagon (12a), entre les deux pièces de tête de wagon (16).

14. Dispositif de transbordement de marchandises (1) servant à charger et à décharger des trains de marchandises avec des marchandises de détails en vrac, en particulier des marchandises de conteneur, en particulier servant à transborder les marchandises de détail en vrac, en particulier les marchandises de conteneurs, depuis la rue, d'usines ou d'ateliers de fabrication vers le rail, et inversement, au moyen d'un chargement transversal horizontal au moyen de superstructures de wagon (12) pouvant être retirées de respectivement un châssis de wagon (10) d'un wagon de marchandises (3), recevant les marchandises de détail, présentant :
a) une voie ferrée (2) avec deux brins de voie ferrée (2a ; 2b),
b) une voie de chargement (4) disposée à côté de la voie (2) et de manière parallèle par rapport à celle-ci,
c) des dispositifs de levage (13), de préférence de manière stationnaire, servant à relever et à abaisser les superstructures de wagon (12) de ou sur le châssis de wagon (10) respectif,
d) au moins un système de transport transversal pour le transport transversal des superstructures de wagon (12) depuis un wagon de marchandises (3) sur la voie de chargement (4), et inversement, avec respectivement au moins un moyen de transport transversal (5) pouvant être déplacé de manière préférée de manière transversale par rapport à la voie ferrée (2),
**caractérisé en ce que**
le dispositif de transbordement de marchandises (1) présente au moins un, de préférence plusieurs, wagons de marchandises (3) selon l'une quelconque des revendications précédentes.

15. Dispositif de transbordement de marchandises (1) selon la revendication 14,
**caractérisé en ce que**
le dispositif de transbordement de marchandises (1) présente par système de verrouillage un système de pivotement et de déverrouillage (26) servant à desserrer le verrouillage des parois latérales de wagon (9) et servant à déployer et à rabattre les parois latérales de wagon (9).

16. Dispositif de transbordement de marchandises (1) selon la revendication 14 ou 15,
**caractérisé en ce que**
le dispositif de transbordement de marchandises (1) présente un appareil de chargement et de déchargement (42) automatisé servant à charger et à décharger le wagon de marchandises (3), dans lequel l'appareil de chargement et de déchargement (42) est de manière préférée un appareil de commandes de rayonnage (43), lequel est disposé sur le côté, opposé à la voie ferrée (2), de la voie de chargement (4) et peut effectuer des déplacements en va-et-vient dans le sens longitudinal de superstructure (12a) à côté de la voie de chargement, dans lequel de préférence un entrepôt à rayonnages hauts (45) est disposé sur le côté, opposé à la voie de chargement (4), de l'appareil de commande de rayonnages (43).

17. Dispositif de transbordement de marchandises (1) selon la revendication 14 ou 15,
**caractérisé en ce que**
le dispositif de transbordement de marchandises (1) présente un moyen de transport pour les contenants (40), en particulier un chariot remorqueur ou une bande de convoyage ou une bande à rouleaux ou une voie de convoyage à rouleaux, lequel est disposé sur le côté, opposé à la voie ferrée (2), de la voie de chargement (4).

18. Dispositif de transbordement de marchandises (1) selon l'une quelconque des revendications 14 à 17,
**caractérisé en ce que**
le dispositif de transbordement de marchandises (1) présente des moyens de commande, de préférence un ordinateur de pilotage, servant à commander le chargement et le déchargement, en particulier l'appareil de chargement et de déchargement (42), qui est relié par transmission de signaux à l'appareil de chargement et de déchargement (42).

19. Procédé servant à décharger un train de marchandises avec des wagons de marchandises (3) selon l'une quelconque des revendications 1 à 13, en particulier en utilisant un dispositif de transbordement de marchandises (1) selon l'une quelconque des revendications 14 à 18, avec des étapes de procédé suivantes :
a) relèvement des superstructures de wagon (12) des châssis de wagon (10),
b) transport des superstructures de wagon (12) soulevées vers la voie de chargement (4) et dépôt sur la voie de chargement (4) ou les socles (46),
c) déchargement automatisé de superstructures de wagon (12), en particulier retrait automatisé des contenants (40) hors de compartiments (39), au moyen d'un appareil de chargement et de déchargement (42) automatisé, en particulier d'un appareil de commande de rayonnages (43).

20. Procédé selon la revendication 19 avec des étapes de procédé suivantes :
a) relèvement des superstructures de wagon (12) des châssis de wagon (10),
b) déverrouillage et rabattement des parois latérales de wagon (9) vers l'extérieur,
c) déplacement d'au moins respectivement deux systèmes de transport transversal, en particulier des mâchoires de navette (5), sous respectivement une superstructure de wagon (12),
d) dépôt des superstructures de wagon (12) sur les systèmes de transport transversal, en particulier les mâchoires de navette (5),
e) déplacement des systèmes de transport transversal, en particulier des mâchoires de navette (5) sur la voie de chargement (4),
f) de préférence dépôt des superstructures de wagon (12) sur une strate inférieure, en particulier la voie de chargement (4) ou les socles (46),
g) déchargement automatisé des superstructures de wagon (12), en particulier retrait automatisé des contenants (40) hors des compartiments (39), au moyen d'un appareil de chargement et de déchargement (42) automatisé, en particulier d'un appareil de commande e rayonnages (43), dans lequel de préférence l'appareil de chargement et de déchargement (42) est commandé au moyen d'un moyen de commande, de manière préférée de l'ordinateur de pilotage.
